# FASCICULE DE BREVET EUROPEEN

(11) **EP 2 904 369 B1**
(45) Date de publication et mention de la délivrance du brevet: **29.08.2018**
(21) Numéro de dépôt: 13795816.1
(22) Date de dépôt: 07.10.2013
(51) Int. Cl.: G01N 1/08, G01N 1/04

(54) **OUTIL DE PRELEVEMENT DE MATERIEL VEGETAL, AUTOMATE LE COMPORTANT, CELLULE DE PRELEVEMENT EQUIPEE D'UN TEL AUTOMATE ET PROCEDE DE PRELEVEMENT**
WERKZEUG ZUR PROBENNAHME AUS PFLANZENMATERIAL, AUTOMAT DAMIT, ENTNAHMEZELLE MIT EINEM DERARTIGEN AUTOMATEN UND ENTNAHMEVERFAHREN
TOOL FOR SAMPLING PLANT MATERIAL, AUTOMATON COMPRISING SAME, SAMPLING CELL PROVIDED WITH SUCH AN AUTOMATON AND SAMPLING METHOD

(30) Priorité: 05.10.2012 FR 1259526
(43) Date de publication de la demande: 12.08.2015
(60) Demande divisionnaire: 16200750.4
(73) Titulaire: Vilmorin & Cie, 75001 Paris (FR)
(72) Inventeur: TURCHI, Hervé, F-34830 Clapiers (FR); CHAMPAIN, Guillaume, F-34130 Mauguio (FR); SAYAG, Rémi, F-34160 Saint Bauzille de Montmel (FR); HAVARD, Marc, F-30210 Ledenon (FR); AMOUROUX, Pierre, F-63100 Clermont Ferrand (FR)
(74) Mandataire: Ipside
(86) Numéro de dépôt international: PCT/FR2013/052373
(87) Numéro de publication internationale: WO 2014/053792

(56) Documents cités:
- WO-A1-2004/063720
- US-A- 2 632 950
- US-A- 3 921 459
- US-A1- 2008 227 662
- US-A1- 2009 139 353
- US-A1- 2009 229 438
- US-B1- 6 659 338

## Description

### Domaine technique.

La présente invention est du domaine des matériels utilisés par exemple pour découper sur l'une des feuilles d'une plante, un échantillon végétal à analyser. Plus particulièrement, la présente invention est relative à un outil de prélèvement d'un échantillon par exemple d'une plante, d'une plantule ou d'une partie de plante, de préférence au niveau d'une feuille ou d'un cotylédon, de manière encore préférée au niveau de la première feuille, aux fins d'analyses génétiques, voire phénotypiques, ou encore pathologiques (identification de la présence d'un parasite viral, bactérien, fongique ou autre).

### État de la technique antérieure.

On sait que l'activité de sélection et d'amélioration des plantes implique l'utilisation des technologies d'analyses génétiques les plus performantes, identifiant le plus rapidement possible les plantes, notamment au stade de plantules portant des combinaisons génétiques d'intérêt. Ces analyses se font à partir de prélèvements tissulaires des plantes, suivis d'une extraction d'ADN qui sera alors analysé. De manière similaire, l'activité de sélection et d'amélioration des plantes implique des capacités d'analyse pathologiques : les plantes sont soumises à des agressions virales, bactériennes ou encore fongiques et il peut être nécessaire d'identifier ces agresseurs, par exemple au moyen d'analyses ADN, par prélèvement sur les tissus végétaux. Toutefois, l'analyse génétique des plantes, voire de leurs agresseurs, fait face à un goulet d'étranglement, non en termes de capacité d'analyse, mais en termes de capacité de fourniture de matériel végétal à analyser. Autrement dit, les laboratoires ont généralement la capacité de réaliser un nombre d'analyses génétiques bien supérieur à ce qu'il est aujourd'hui, à condition qu'ils reçoivent suffisamment d'échantillons de matériel végétal à traiter. Des documents typiques de l'état de la technique sont US2008/227662, WO2004/063720, US02009/139353, US2009/229438, US2632950. Dans les laboratoires, les techniciens aujourd'hui en charge de cette tâche sont au maximum de leurs capacités, consacrant tout leur temps à la collecte d'échantillons alors qu'ils pourraient être employés à des tâches plus qualifiées. De plus, un tel travail répétitif, présentant un niveau de pénibilité important, entraîne un certain pourcentage d'erreurs qui peuvent fausser l'identification des plantes d'intérêt. De surcroît, l'homogénéité des prélèvements risque de varier au fil des opérations. De plus il existe des risques de pollution de l'échantillon par mauvaise manipulation.

Certaines solutions techniques d'échantillonnage automatisé existent, telles que par exemple le « seed chipping » (prélèvement automatisé d'un échantillon biologique sur une graine, par exemple une graine de maïs) mais ne sont pas adaptées à la petite taille de la plupart des graines des espèces potagères (tomate, laitue...) et de certaines espèces de grandes cultures (colza par exemple).

### Exposé de l'invention.

La présente invention a pour objet de proposer un outil permettant le prélèvement rapide et non destructif d'un grand nombre d'échantillons de matériel végétal.

À cet effet l'outil de prélèvement préférentiellement de tissus végétaux selon l'invention est défini dans la revendication 1. De telles dispositions ont pour effet de mécaniser le prélèvement d'échantillons végétaux, sans risque d'erreur et d'une façon automatique.
La position initiale du poinçon correspond à une position de libération de l'ouverture en vue de l'introduction dans cette dernière du matériel végétal. En position intermédiaire du poinçon, l'échantillon végétal se situe dans l'alésage de la matrice et y est maintenu essentiellement par frottement. Dans cette position, le support de l'outil de prélèvement peut être déplacé à grande vitesse depuis la zone de prélèvement de l'échantillon vers une zone de délivrance de ce dernier. La position finale du poinçon correspond à la position de délivrance de l'échantillon découpé. Dans cette position, l'outil est disposé au-dessus de la zone de délivrance et plus particulièrement au-dessus d'un récipient approprié prévu pour recevoir l'échantillon.

Pour faciliter l'éjection de l'échantillon, selon une autre caractéristique de l'invention, l'outil prévoit des moyens d'éjection d'un fluide gazeux ou d'un fluide liquide ou d'un mélange des deux en extrémité inférieure du poinçon.

Selon une autre caractéristique de l'invention, ces moyens d'éjection comprennent une tête d'alimentation en fluide gazeux et/ou liquide, un canal interne de distribution d'un fluide gazeux et/ou liquide, formé dans le poinçon, en relation de communication avec la tête d'alimentation et au moins un ajutage formé dans la partie inférieure du poinçon et débouchant dans la face inférieure de ce dernier ledit ajutage étant en relation de communication avec le canal interne du poinçon.

Selon une autre caractéristique de l'invention, le canal interne reçoit une canule de distribution de fluide gazeux et/ou liquide, en relation de communication d'une part avec la tête d'alimentation et d'autre part avec le ou chaque ajutage.

Selon une autre caractéristique de l'invention, le diamètre de la canule est plus faible que le diamètre du canal afin de ménager entre ladite canule et ledit canal une voie de passage au fluide gazeux et/ou liquide, cette voie de passage étant en relation de communication d'une part avec la tête d'alimentation et d'autre part avec le ou chaque ajutage du poinçon.

Selon une autre caractéristique de l'invention, l'ouverture d'introduction du végétal est évasée. Cette disposition facilite la mise en place du matériel végétal dans l'ouverture.

Selon une forme pratique de réalisation, l'ouverture d'introduction est limitée par une face horizontale inférieure, correspondant à la face supérieure de la matrice, par une face oblique supérieure, correspondant à la face inférieure du corps de guidage et par une face verticale arrière d'une paroi liant la matrice au corps de guidage.

Selon une autre caractéristique de l'invention, la trajectoire du poinçon est tangente à la face verticale arrière de l'ouverture et l'alésage traversant de la matrice est tangent à un plan géométrique contenant ladite face arrière afin de réaliser dans le végétal dont l'échantillon est prélevé une découpe à contour ouvert.

Selon une autre caractéristique de l'invention, la section droite de la partie inférieure du poinçon et la section droite de l'alésage de la matrice présentent chacune, en considérant le sens du mouvement d'introduction du végétal dans l'ouverture qui s'effectue de l'avant vers l'arrière, une partie avant et une partie arrière, la partie avant étant plus large que la partie arrière.

En combinaison avec cette caractéristique, le contour de chaque partie arrière des sections droites de la partie inférieure du poinçon et de l'alésage de la matrice est tangent à un plan géométrique contenant la face arrière de l'ouverture.

Ces dispositions permettent de découper l'échantillon à distance du bord de la feuille et de réaliser une découpe à contour ouvert facilitant le retrait de l'outil de prélèvement sans détériorer ladite plante.

La présente invention a également pour objet un automate pour le prélèvement d'échantillons comprenant un bras manipulateur, éventuellement multiaxes portant l'outil de prélèvement selon l'invention.

La présente invention a également pour objet une cellule automatisée de prélèvement d'échantillons comprenant une structure porteuse recevant des plants à analyser, éventuellement une table support déplaçable en hauteur face à la structure porteuse et éventuellement un système de transfert de plateaux entre la structure support et la table, caractérisée en ce qu'elle comprend un outil de prélèvement selon l'invention.

Selon une autre caractéristique de l'invention, la cellule comprend en plus une chaîne d'alimentation de récipients destinés à recevoir les échantillons prélevés par l'outil.

La présente invention a également pour objet une cellule automatisée de prélèvement d'échantillons. Une telle cellule se caractérise essentiellement en ce qu'elle comprend :
- une table support prévue pour recevoir des plaques alvéolées portant des plantes en motte à échantillonner,
- un automate doté d'un bras manipulateur et,
- un outil de prélèvement selon l'invention porté par le bras manipulateur de l'automate.

Selon une autre caractéristique de l'invention, la table support de la cellule comporte un système de transfert de plaques alvéolées, apte à assurer le transfert des plaques alvéolées entre la table support et un moyen de transport des plaques alvéolées et réciproquement.

Selon une autre caractéristique de l'invention, la table support est déplaçable en hauteur face au moyen de transport.

La présente invention a également pour objet un moyen de transport des plaques alvéolées apte à assurer le transport desdites plaques depuis une aire de stockage et/ou de croissance des plantes, vers la cellule de prélèvement et inversement depuis ladite cellule vers ladite aire de stockage et/ou de croissance.
L'aire de stockage et/ou de croissance des plantes peut être constituée par une serre, ou par toute autre enceinte propre au stockage et/ou à la croissance des plantes.

Selon une autre caractéristique de l'invention, le moyen de transport est constitué par un chariot de transport doté d'étagères horizontales régulièrement espacées fixées au châssis et deux jeux d'organes de roulement dont un est porté par un système de monte et baisse.

La présente invention a également pour objet un procédé pour le prélèvement d'un échantillon tel que défini dans la revendication 19. La présente invention a également pour objet un procédé pour l'analyse des échantillons, comprenant : les étapes tel que définis dans la revendication 20. Les techniques d'extraction de l'ADN puis de leur analyse, par exemple au moyens de marqueurs moléculaires sont connues de l'homme de l'art en biologie moléculaire. Elles sont par exemple décrites dans la demande de brevet FR 07/01589, l'ADN y étant obtenu par une extraction CTAB (Cetyl Trimethylammonium Bromide) /chloroforme et le marquage moléculaire étant réalisé au moyen de marqueurs CAPS (Cleaved Amplified Polymorphic Sequence) et SCAR (Sequence Amplified Characterized Région). Par marqueur moléculaire, on entend un fragment spécifique d'une séquence d'ADN pouvant être identifiée au sein du génome d'un individu et pouvant être notamment utilisée pour localiser un gène d'intérêt, vérifier si un individu a hérité d'une caractéristique particulière d'un parent ou différencier deux individus. Il peut s'agir ou non d'une séquence codante. Le marqueur peut être dominant, co-dominant. La détection du marqueur moléculaire, ou sa non-détection, permet de sélectionner les individus présentant le gène d'intérêt ou la caractéristique particulière, ou au contraire, de ne pas sélectionner les individus ne présentant pas le gène d'intérêt ou la caractéristique particulière. Dans la présente invention, les marqueurs moléculaires permettent de tester rapidement les plantes ou plantules en cours de développement et de retenir celles qui possèdent les caractéristiques recherchées. Des marqueurs moléculaires de différentes natures sont connus de l'homme du métier : AFLP (polymorphismes de longueur des fragments d'amplification), SCAR (caractérisation de produits d'amplification), SSR (microsatellites, répétitions de séquences simples), RFLP (polymorphismes de longueur des fragments de restriction), etc. Un procédé -ne faisant pas partie de l'invention- consiste en l'élimination sélective des plantes ne comprenant pas le ou les éléments génétiques recherchés, par exemple des marqueurs moléculaires, ledit procédé comprenant :
a) le déplacement de l'outil vers une plante préalablement choisie ou alternativement le déplacement de la plante vers l'outil,
b) l'engagement de l'ouverture de part et d'autre de l'une des feuilles de cette plante,
c) la découpe d'un échantillon par poinçonnage de la feuille et ce par mouvement du poinçon depuis sa position initiale vers sa position intermédiaire,
d) le maintien du poinçon de l'outil en position intermédiaire, afin de maintenir l'échantillon dans l'alésage traversant de la matrice,
e) le retrait de l'outil ou alternativement de la plante, tout en assurant le maintien du poinçon de l'outil en position intermédiaire,
f) le dépôt de l'échantillon dans un récipient approprié et dédié,
g) l'analyse des échantillons, notamment l'analyse de leur ADN,
h) la destruction des plantes par un système d'aspiration des plantes lors d'un second passage des plaques alvéolées dans la cellule automatisée de prélèvement d'échantillons.

Selon une autre caractéristique commune aux trois procédés tels qu'exposés ci-dessus, le dépôt de l'échantillon est effectué par mouvement du poinçon de l'outil de prélèvement depuis sa position intermédiaire vers sa position finale.

Selon une autre caractéristique, le dépôt de l'échantillon est effectué par éjection d'un fluide.
Ce fluide peut être un gaz ou un liquide ou bien encore un mélange des deux.

L'éjection du fluide peut constituer une alternative au dépôt de l'échantillon par mouvement du poinçon, mais cette éjection peut être conjointe au mouvement du poinçon entre la position intermédiaire et la position finale.

Selon une autre caractéristique commune aux trois procédés tels qu'exposés ci-dessus, est réalisée dans la plante une découpe à contour ouvert tangent ou sécant à l'un des bords de ladite plante.

### Bref exposé des figures et des dessins.

D'autres buts, caractéristiques et avantages de l'invention apparaîtront à la lecture de la description d'une forme préférée de réalisation, donnée à titre d'exemple non limitatif en se référant aux dessins annexés en lesquels :
- la figure 1 est une vue en perspective d'une première forme de réalisation d'un outil de prélèvement selon l'invention,
- la figure 2 est une vue en coupe longitudinale de l'outil selon sa première forme de réalisation,
- la figure 3 est une vue en coupe d'une tête d'alimentation de l'outil selon la première forme de réalisation, assurant notamment la liaison mécanique entre le moyen moteur et le poinçon,
- la figure 4 est une vue de dessous du poinçon,
- les figures 5 à 7 illustrent le mode de fonctionnement de l'outil selon la première forme de réalisation de l'invention,
- la figure 8 est une vue en perspective d'une variante de réalisation de l'outil selon l'invention,
- la figure 9 est une vue de dessous de l'outil selon la variante de réalisation,
- la figure 10 est une vue en coupe longitudinale selon la ligne AA de la figure 9,
- la figure 11 est une vue en coupe longitudinale selon la ligne BB de la figure 9,
- la figure 12 est une vue de détail en perspective d'une variante d'exécution de l'outil et plus particulièrement de sa partie inférieure,
- la figure 13 est une vue en perspective d'une cellule de prélèvement automatisée selon l'invention,
- la figure 14 est une vue en perspective de cette même cellule sans les éléments de l'enceinte et sans le moyen de transport des plaques alvéolées portant les plantes ou plantules à échantillonner,
- les figures 15 et 16 sont des vues partielles de la cellule, en perspective montrant la table support,
- la figure 17 est une vue partielle d'une tige rigide élévatrice équipant la table support,
- la figure 18 est une vue arrière en perspective d'une cellule de prélèvement,
- la figure 19 est une vue arrière en perspective de la table support,
- les figures 20 et 21 sont des vues en perspective montrant les moyens de levage de la table support,
- la figure 22 est une vue en perspective d'une table support selon une autre forme de réalisation,
- les figures 23 et 24 montrent les moyens d'alimentation en boîtes d'échantillonnage, et une nacelle de transport des boîtes d'échantillonnage vers une zone de stationnement et de recueil des échantillons prélevés, la boîte d'échantillonnage n'étant pas représentée en figure 24,
- la figure 25 est une vue schématique d'un moyen d'élimination des plantes en motte par aspiration,
- la figure 26 est une vue en perspective d'un chariot de transport,
- la figure 27 est une vue partielle, en perspective de dessous, de la partie inférieure du chariot de transport,
- la figure 28 montre la découpe réalisée dans une plantule par exemple dans l'une des feuilles de cette dernière,
- la figure 29 illustre les étapes du procédé, selon l'invention, pour le prélèvement d'un échantillon,
- la figure 30 illustre les étapes du procédé, selon l'invention, pour l'analyse des échantillons,
- la figure 31 illustre les étapes du procédé, selon l'invention, pour l'élimination sélective des plantes.

### Meilleure manière de réaliser l'invention.

Dans la présente description, il faut entendre par « échantillonner » l'action consistant à prélever par découpe un échantillon dans un végétal.

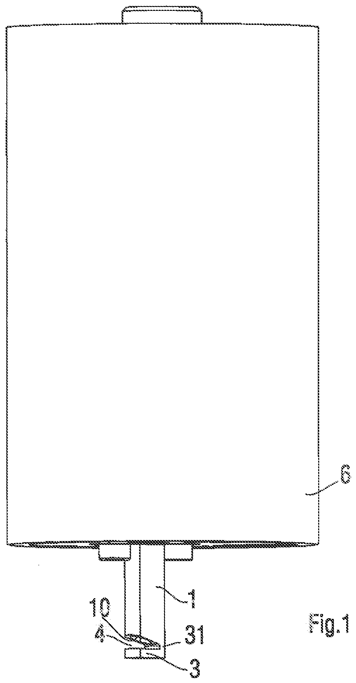

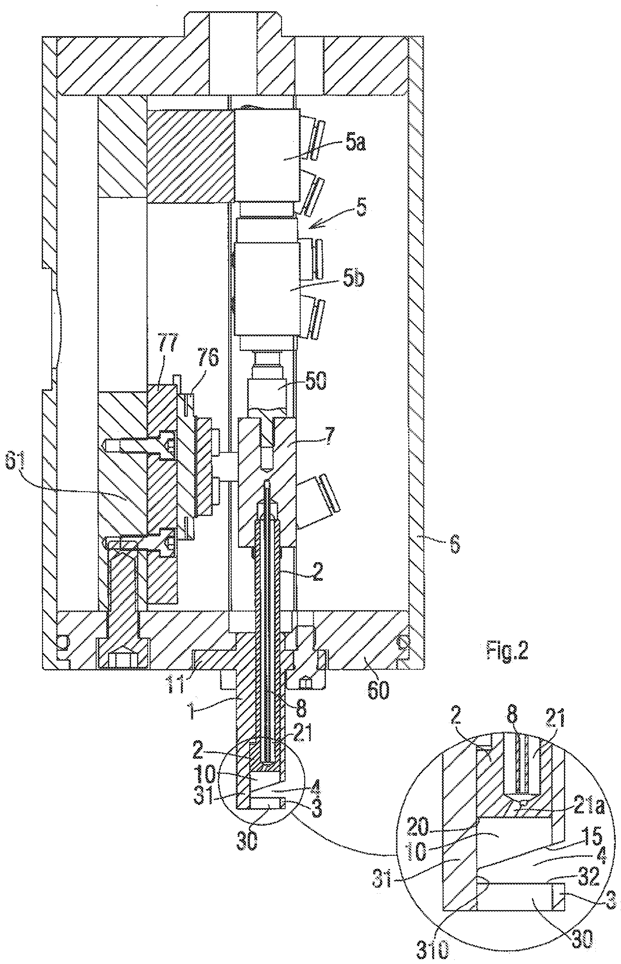

On observe en figures 1 à 4 un outil selon une première forme de réalisation. Tel que représenté sur ces figures, l'outil de prélèvement selon l'invention est prévu pour être porté par exemple en extrémité d'un bras manipulateur, multiaxes, connu en soi. Il peut être porté par tout autre système mécanisé à plusieurs degrés de liberté, apte à le déplacer selon les trois directions et les trois orientations de l'espace. Cet outil, selon une variante de réalisation, est porté par un opérateur et est manipulé et actionné par cet opérateur.

L'outil l'selon l'invention comprend un corps de guidage 1 longiforme, vertical doté d'un alésage axial traversant 10 dans lequel est monté en ajustement glissant un poinçon emporte-pièce 2. L'outil comprend également, sous et à distance de l'extrémité inférieure du corps de guidage 1, une matrice emporte-pièce 3 solidarisée au corps de guidage par une paroi 31. Cette matrice 3 est ainsi séparée de l'extrémité inférieure du corps de guidage par une ouverture 4 d'introduction du végétal à découper.

La matrice emporte-pièce 3, dans l'alignement axial de l'alésage traversant 10 du corps de guidage 1, est pourvue d'un alésage traversant 30, de section droite constante, dans lequel pénètre l'extrémité inférieure du poinçon lors du découpage de l'échantillon végétal à prélever sur la feuille préalablement introduite dans l'ouverture 4. L'extrémité inférieure 20 du poinçon 2 et l'alésage 30 de la matrice présentent, au jeu fonctionnel près, des sections droites identiques en contours et dimensions.

L'outil 1' selon la première forme de réalisation comprend de plus un moyen moteur 5 d'actionnement du poinçon 2 entre une position initiale selon laquelle il est rétracté dans le corps de guidage 1, une position intermédiaire selon laquelle, par son extrémité inférieure 20, il est situé dans l'alésage 30 de la matrice 3, et une position finale selon laquelle il traverse de part en part la matrice 3 et selon laquelle son extrémité inférieure 20 est externe à l'alésage traversant 30 de la matrice. Ce moyen moteur 5 comprend un élément de sortie 50 à déplacement linéaire, sur lequel un effort et un mouvement de déplacement sont disponibles. Cet élément de sortie se présente sous la forme d'une tige rigide.

Selon une forme pratique de réalisation, le corps de guidage 1 comporte en extrémité supérieure une platine 11 de fixation à l'embase inférieure 60 d'un carter de protection 6 renfermant notamment le moyen moteur 5. L'embase 60, dans le prolongement axial de l'alésage traversant 10 présente un perçage traversant de passage du poinçon 2. Ce carter de protection 6 est doté de moyens de fixation, connus en soi, au bras manipulateur.

De préférence l'outil 1' dans ses deux formes de réalisation est doté de moyens d'éjection d'un fluide gazeux ou d'un fluide liquide ou d'un mélange des deux en extrémité inférieure du poinçon. Ces moyens permettent d'éjecter l'échantillon prélevé et sont décrits ci-après. Le poinçon emporte-pièce 2 comporte un canal interne 21 débouchant à son extrémité supérieure pour être en relation de communication avec une tête 7 d'alimentation en fluides gazeux et/ou liquide. En partie inférieure, ce canal interne 21 est en relation de communication avec au moins un ajutage 21a formé dans la partie inférieure du poinçon et débouchant dans la face inférieure de ce dernier.

Selon la forme préférée de réalisation, le poinçon comporte en partie inférieure trois ajutages 21a se développant de préférence de manière oblique par rapport à l'axe longitudinal du canal interne.
Ces dispositions permettent d'injecter en partie inférieure un fluide sous forme gazeuse et/ou un liquide pour faciliter l'éjection de l'échantillon. Les ajutages 21a que présente ce canal 21, en partie inférieure, permettent de répartir le fluide gazeux et/ou liquide sur plusieurs zones de l'échantillon et faciliter ainsi son éjection.

De même ce canal 21 et les ajutages 21a, peuvent être soumis à une légère dépression en vue d'assurer le maintien de l'échantillon en extrémité inférieure du poinçon 2, lors du mouvement de l'outil 1' depuis la zone de prélèvement vers la zone de dépose.

Selon la première forme de réalisation de l'outil 1', la tête d'alimentation 7 est fixée au moyen moteur 5 et plus particulièrement à l'élément de sortie 50 que possède ce dernier. Cette tête 7 assure donc la transmission de mouvement entre l'élément de sortie 50 du moyen moteur 5 et le poinçon 2.

Cette tête 7 selon les deux formes de réalisation de l'outil 1', présente un premier perçage axial cylindrique 70 en relation de communication avec le canal 21 du poinçon, ce premier perçage axial 70 étant en relation de communication par l'intermédiaire d'un premier perçage radial 71, avec un embout 72 fixé à la tête d'alimentation et raccordé à une source de fluide gazeux et/ou liquide, par exemple un gaz comprimé, par l'intermédiaire d'une conduite et d'une électrovanne non représentées. Selon la première forme de réalisation de l'outil 1' la partie supérieure du poinçon 2 est fixé de manière étanche dans le premier perçage 70. On peut noter que le perçage radial 71 débouche dans le perçage cylindrique 70 au-dessus du poinçon.

En position finale du poinçon 2, l'électrovanne est activée dans le sens de l'ouverture afin que du gaz comprimé, en l'espèce de l'air, soit introduit dans le canal 21 du poinçon 2. L'éjection de cet air comprimé, par les ajutages 21a que le canal présente en extrémité inférieure, permet de chasser l'échantillon prélevé. Cet échantillon est destiné à être recueilli par tout récipient approprié par exemple du type de ceux commercialisés par la Société QUIAGEN sous la référence « Collection Microtubes Nonsterile polypropylene tubes ».

Afin d'activer l'électrovanne lorsque le poinçon 2 atteint sa position finale, est prévu au moins un capteur de position du type inductif par exemple. Ce capteur est apte à détecter la position finale du poinçon 2 et à générer un signal en réponse. Ce signal a pour effet d'activer l'électrovanne afin que de l'air sous pression soit délivré. Il y a lieu de noter que la délivrance de l'air sous pression s'effectue sous la forme d'une impulsion.

Le canal 21, selon une forme préférée de réalisation, est équipé d'une canule 8 de distribution de fluide gazeux ou liquide. Comme on peut le voir, cette canule 8 s'étend axialement dans le canal 21 et présente un diamètre bien plus faible que le diamètre de ce dernier. Ainsi, autour de la canule 8 est libéré un passage suffisant au fluide gazeux ou liquide. Cette canule 8, par son canal interne est en relation de communication avec un second perçage axial cylindrique 73 formé dans la tête d'alimentation 7 de préférence dans le prolongement axial du premier perçage 70. Ce second perçage 73 est en relation de communication par l'intermédiaire d'un second perçage radial 74 avec un second embout 75. Cet embout, fixé à la tête 7, est raccordé à cette source de fluide gazeux et/ou liquide par l'intermédiaire d'une conduite et d'une électrovanne non représentées. Dans la forme préférée de réalisation, la canule par son extrémité supérieure est engagée de manière étanche dans le second perçage axial 73.

Comme indiqué précédemment, l'ouverture de l'électrovanne afin que du liquide et/ou du gaz soit délivré et éjecté en extrémité du poinçon, sera déclenchée par le signal généré par le capteur de position. Il y a lieu de noter que cette délivrance et éjection de liquide et/ou de gaz se présente sous la forme d'une impulsion.

Il y a lieu de noter que le second perçage radial 74 débouche dans le second perçage axial 73 au-dessus de la canule de distribution 8.

Avantageusement, la tête d'alimentation 7 est équipée d'un coulisseau 76. Ce coulisseau 76 est engagé en coulissement sur une glissière verticale 77 solidaire d'une platine verticale 61 montée en fixation sur l'embase 60.

L'ouverture 4 présente par exemple une forme évasée pour faciliter l'introduction du matériel végétal. Comme on peut le voir, cette ouverture 4 est limitée par une face horizontale supérieure 32 de la matrice 3, par une face oblique inférieure 15 du corps de guidage et par une face verticale arrière 310 appartenant à la paroi 31.

De préférence, la section droite de la partie inférieure du poinçon 2, et la section droite de l'alésage de la matrice présentent chacune une partie avant et une partie arrière, la partie avant étant plus large que la partie arrière. La partie avant est définie comme étant celle la plus éloignée d'un plan géométrique contenant la face verticale arrière 310.

Selon une forme pratique de réalisation, le contour de chaque partie avant et arrière s'établit selon une courbe, par exemple un arc de circonférence de cercle, le rayon de courbure de la partie avant étant supérieur au rayon de courbure de la partie arrière. Ces contours avant et arrière sont joints par des segments de droite.

En combinaison avec ces caractéristiques, le contour de chacune des parties arrières des sections droites de la partie inférieure du poinçon et de l'alésage de la matrice, est tangent à un plan géométrique vertical contenant la face arrière 310 de l'ouverture 4. Cette disposition, lors de la découpe de l'échantillon, permet de former sur le matériel végétal (en l'espèce l'une des feuilles d'une plante), un contour ouvert à l'arrière permettant le retrait de l'outil 1' sans endommager la feuille, ce retrait étant opéré alors que le poinçon 2 est en position intermédiaire.

Avantageusement, le moyen moteur 5 de l'outil 1' selon la première forme de réalisation, est formé de deux organes moteurs par exemple pneumatiques 5a, 5b agencés en série, alignés selon un axe vertical. L'organe moteur supérieur 5a est fixé à la platine arrière 61. Cet organe moteur 5a est doté d'un élément de sortie à déplacement linéaire, sous forme de tige. L'élément de sortie de l'organe moteur 5a est rigidement fixé à la carcasse de l'organe moteur 5b, ce dernier étant porté par l'organe moteur 5a. L'élément de sortie de l'organe moteur 5b constitue l'élément de sortie 50 du moyen moteur 5.

L'état désactivé des deux organes moteurs 5a, 5b correspond à la position initiale du poinçon 2, tandis que l'état activé de l'un des deux organes moteurs 5a, 5b, par exemple le moteur 5a, correspond d'abord au mouvement de découpage de l'échantillon végétal et au maintien du poinçon 2 en position intermédiaire. L'activation simultanée des deux organes moteurs 5a, 5b et le maintien de ces organes moteurs dans cet état correspond à la position finale du poinçon 2.

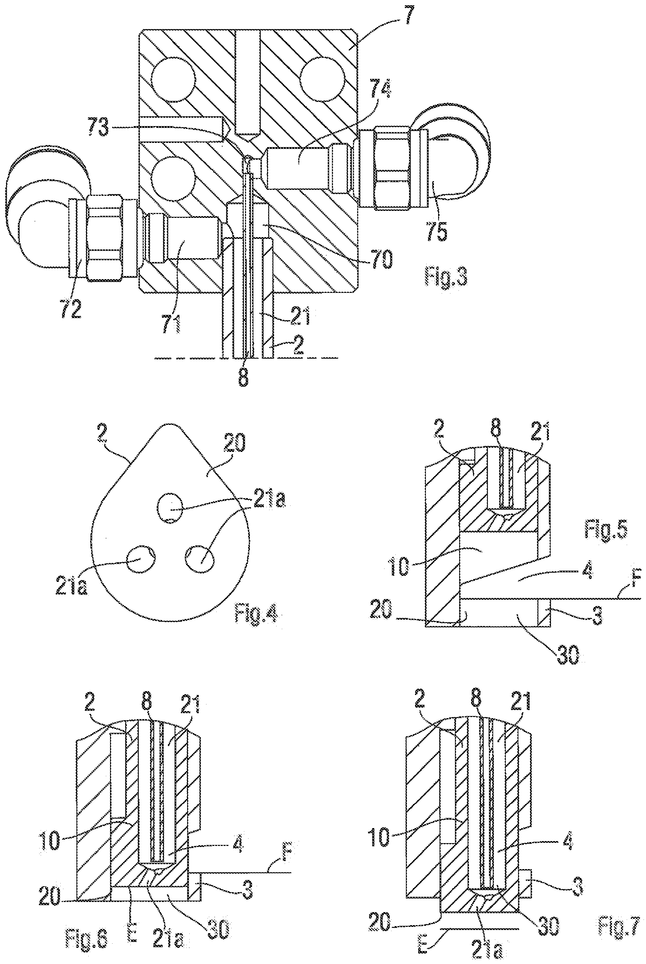

En référence aux figures 5 à 7, on va maintenant expliquer le fonctionnement de l'outil 1' selon l'invention.

L'outil 1' est déplacé vers une plante préalablement choisie et l'ouverture 4 est engagée de part et d'autre de l'une des feuilles F de cette plante (Fig.5). Selon une alternative, c'est la plante qui est déplacée vers l'outil 1'. Lors de ce mouvement d'approche et de positionnement, les deux organes moteurs 5a, 5b sont désactivés et le poinçon 2 est maintenu en position initiale. Par la suite, l'organe moteur 5a est activé afin de réaliser une opération de découpe d'un échantillon E par poinçonnage de la feuille F (Fig.6). Le poinçon 2 est alors amené et maintenu en position intermédiaire (Fig.6). Selon cette position, l'échantillon E est logé dans l'alésage 30 de la matrice 3 et se trouve protégé par cette dernière. Toujours en assurant le maintien du poinçon 2 en position intermédiaire, l'outil 1' est animé d'un mouvement de retrait pour être dégagé de la feuille F poinçonnée. Alternativement, la plante est animée d'un mouvement de retrait pour dégager la feuille F poinçonnée de l'outil 1'. Comme le contour de la découpe sur la feuille est ouvert, les berges de cette découpe pourront facilement s'écarter l'une de l'autre pour glisser sur le poinçon 2. Une telle disposition évite tout effort de traction dommageable sur la feuille et sur la plante. Après retrait, l'outil 1' de prélèvement est déplacé vers une zone de délivrance ou de dépose de l'échantillon. Alternativement, la zone de dépose de l'échantillon, par exemple un récipient adapté, est déplacée vers l'outil 1'. En vue de cette dépose, les deux organes moteurs sont activés et le poinçon 2 est entraîné vers sa position finale (Fig.7). L'échantillon E porté par l'extrémité inférieure du poinçon 2 se retrouve à l'extérieur de l'alésage 30 de la matrice 3 pour être déposé dans un récipient approprié par exemple un tube porté par une boîte d'échantillonnage. En position finale du poinçon l'électrovanne associée au circuit de gaz comprimé ou au circuit de liquide sous pression est activé de façon à chasser l'échantillon E vers le récipient dédié.

Après prélèvement, les boites d'échantillonnage contenant les échantillons, et plus particulièrement les récipients ou puits, peuvent être fermées au moyen de couvercles adaptés contenant du silicagel (ou un autre produit ayant la capacité de fixer l'humidité), pour permettre leur déshydratation. Une telle disposition est principalement utilisée pour empêcher la dégradation des échantillons prélevés. Ils peuvent ainsi être transportés ou stockés sans risques de détérioration des tissus. Ce procédé évite par exemple les contraintes d'un maintien au froid pour conserver les tissus ou l'utilisation de lyophilisateur. L'utilisation de gel de silicagel pour la déshydratation de tissus végétaux est par exemple décrit dans l'article de Chase and al., (Taxon, Vol. 40, No 2, may 1991) ou le silicagel est placé directement dans les sachets hermétiques contenants les échantillons. Dans le cas de la présente invention, le silicagel est placé directement dans des couvercles adaptés aux différents formats de boîtes d'échantillonnage, ce qui permet la déshydratation rapide des échantillons sans mélange entre l'échantillon et le déshydratant. Ces couvercles peuvent être réutilisés sans risque de contamination après traitement thermique.

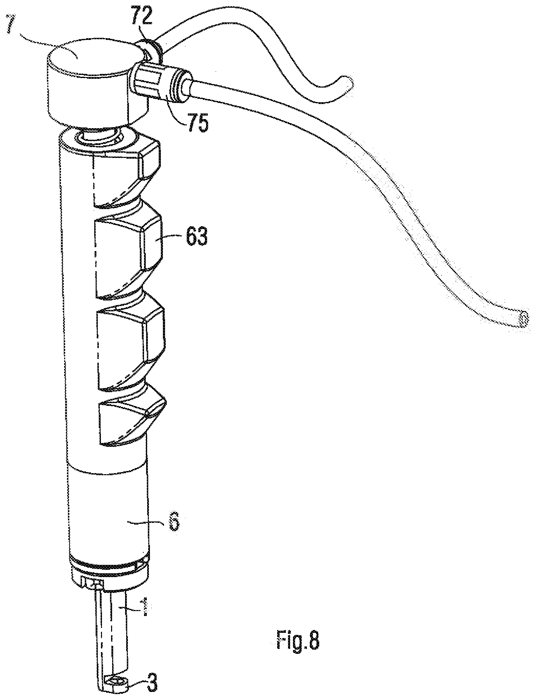

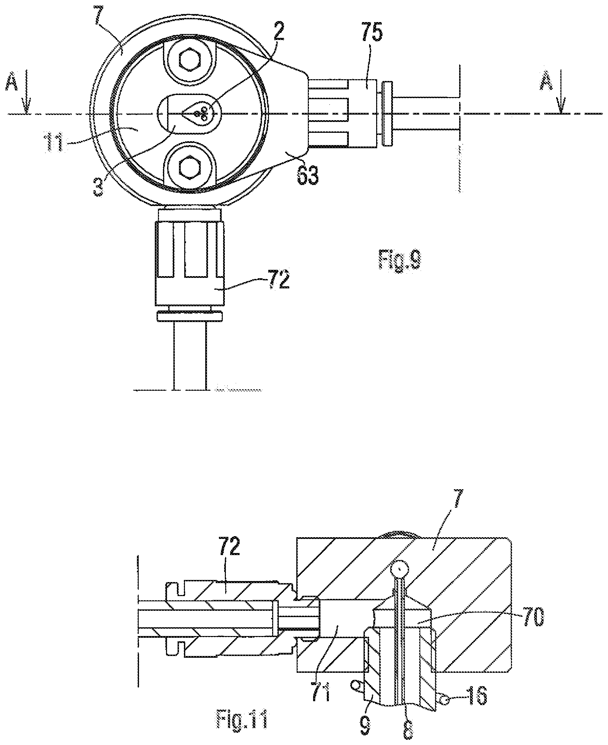

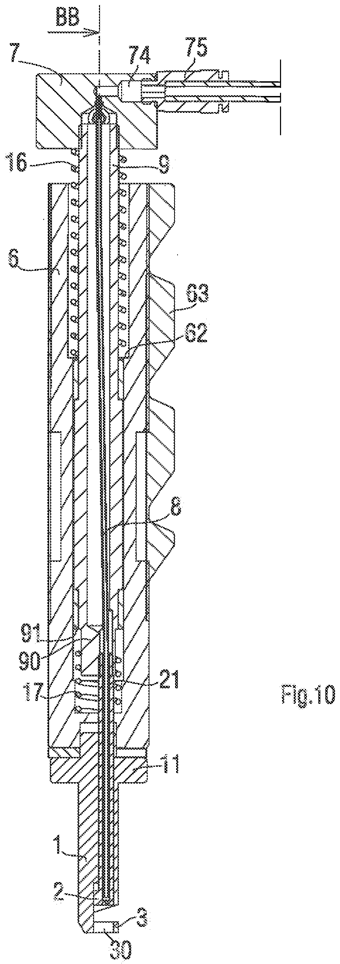

En figures 8 à 11 est représenté un outil 1' selon une variante de réalisation. Cet outil 1' se distingue de celui objet de la première forme de réalisation essentiellement par le mode d'actionnement du poinçon.

Selon cette variante d'exécution, le poinçon 2 est fixé en extrémité inférieure d'une conduite cylindrique rigide 9 engagée en ajustement glissant dans le volume interne du carter de protection 6 de façon à y être guidée en coulissement selon un axe vertical. Le volume interne de cette conduite 9 est en relation de communication avec le canal 21 que comporte le poinçon 2 et est en relation de communication avec la tête 7 d'alimentation en fluide, cette dernière étant portée, extérieurement au carter de protection 6, par la conduite 9.

Selon cette forme de réalisation, la canule 8 est également engagée dans le volume interne de la conduite 9 pour être raccordée de manière étanche à la tête d'alimentation 7 de la façon décrite précédemment. La conduite 9 est engagée en fixation dans le premier perçage 70 de la tête d'alimentation 7 et son volume interne est en relation de communication avec l'embout 72 par l'intermédiaire du premier perçage radial 71.

Autour de la partie supérieure de la conduite 9 est engagé un ressort de rappel 16 à spires non jointives. Ce ressort de rappel 16 est monté en compression entre la tête d'alimentation 7 et un épaulement 62 formé dans le carter 6. Ce ressort de rappel 16 en agissant sur la tête d'alimentation 7 a pour but de solliciter le poinçon 2 vers sa première position. Additionnellement le carter 6 est équipé d'une poignée de préhension 63. Pour manoeuvrer le poinçon 2 de sa position initiale vers sa position finale, l'opérateur en tenant l'outil 1' de sa main par la poignée de préhension 63 agit sur la tête d'alimentation 7 dans le sens de la compression du ressort de rappel 16. Comme on le comprend, la conduite 9 rigide assure la transmission de mouvement et d'effort entre le poinçon 2 et la tête d'alimentation 7.

Dans une forme préférée de réalisation, la conduite 9 en partie inférieure comporte une forme d'embout 90. Cette forme d'embout 90 est raccordée au corps de la conduite par un épaulement annulaire 91. Autour de la forme d'embout 90 est engagé un second ressort de rappel 17 à spires non jointives. Ce ressort de rappel 17 prend appui par son extrémité inférieure contre l'embase 60. En position initiale du poinçon 2, l'épaulement 91 est écarté de l'extrémité supérieure du ressort de rappel 17 tandis qu'en position intermédiaire du poinçon 2, l'épaulement 91 est au contact de l'extrémité supérieure du ressort de rappel 17 qui alors exerce un effort résistant supplémentaire sur la conduite 9. De cette façon est constitué un point de résistance matérialisant la position intermédiaire du poinçon 2. L'opérateur par simple sensation tactile peut alors apprécier la position du poinçon 2.

On comprend que la conduite 9, la tête d'alimentation 7, les organes élastiques 16 et 17, la poignée 63 et/ou le carter 6 constituent des moyens d'actionnement du poinçon entre ses différentes positions.

Le mode de fonctionnement de l'outil 1' selon la variante d'exécution est le suivant. L'opérateur se saisit de l'outil 1' et l'approche de la plante et engage l'ouverture 4 autour d'une des feuilles de cette plante. Il actionne alors le poinçon 2 vers la matrice en agissant en poussée sur la tête d'alimentation 7 afin de découper un échantillon dans la feuille. L'opérateur maintient manuellement alors le poinçon 2 en position intermédiaire et déplace l'outil 1' vers le récipient prévu pour recevoir l'échantillon. L'opérateur agit une nouvelle fois sur le poinçon 2 pour amener ce dernier en position finale et agit sur une commande externe ou sur une commande intégrée à l'outil 1' pour activer l'électrovanne associée au circuit de fluide approprié en vue d'éjecter l'échantillon.

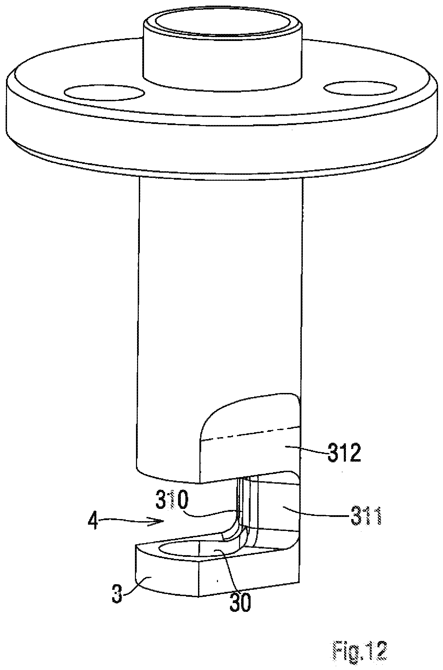

En figure 12 est représentée une variante d'exécution de l'outil 1' conforme à l'invention. On peut voir sur ces figures que la face 310, selon sa hauteur, (la hauteur correspondant ici à la distance entre les deux faces supérieure et inférieure de l'ouverture 4) présente deux dégagements latéraux 311, orientés vers l'arrière. Une telle disposition est garante de pouvoir appliquer le pourtour de la feuille à échantillonner toujours contre la face 310 et ce quel que soit son contour. Une telle disposition réduit le risque d'une absence d'appui de la feuille à échantillonner contre la face 310 ce qui pourrait conduire à la formation d'un échantillon de taille insuffisante pour pouvoir être exploité. En outre le corps de guidage, la paroi 31 et la matrice 3 comportent deux méplats opposés 312 pour faciliter l'introduction de l'outil dans le feuillage des plantes à échantillonner.

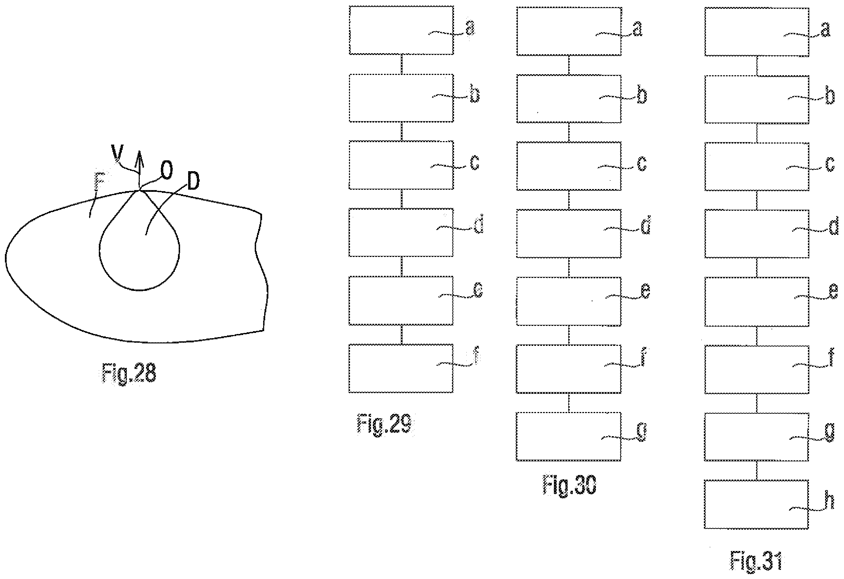

Comme on peut le voir en figure 28, l'outil tel que décrit permet de réaliser dans la feuille F d'une plantule une découpe tangente au contour de la feuille. Ainsi le contour de la découpe D présente une ouverture O permettant le retrait de l'outil selon la flèche V sans endommager la plantule.

L'outil 1' conforme à l'invention peut équiper une cellule automatisée 500 de prélèvement d'échantillons. Cette cellule pourra être constituée d'une enceinte renfermant un automate 510 doté d'un bras manipulateur 511 de préférence multiaxes portant l'outil 1' de prélèvement. A cette cellule, selon un exemple de réalisation, est associé un moyen 520 de transport de plaques alvéolées 530. Ce moyen est apte à assurer le transport des plaques alvéolées 530 depuis une aire de stockage et/ou de croissance des plantes, vers la cellule de prélèvement et depuis cette cellule de prélèvement vers l'aire de stockage et/ou de croissance et ce, de préférence, en circuit fermé. L'aire de stockage et/ou de croissance pourra être constituée par une serre ou tout autre type de bâtiment adapté. Ces plaques alvéolées 530, de forme rectangulaire, comportent des alvéoles organisées selon un maillage régulier, recevant chacun une plante en motte à échantillonner. La paroi de fond de chaque alvéole présente une perforation traversante centrale pour des raisons qui apparaîtront plus loin.

Dans la forme préférée de réalisation, le moyen de transport 520 est constitué par un chariot de transport doté d'étagères 521 horizontales régulièrement espacées verticalement, recevant chacune une plaque alvéolée 530.

La cellule pourra également être équipée d'une table support 550, par exemple déplaçable en hauteur face au chariot de transport 520 et d'un système de transfert 560 des plaques alvéolées 530 entre le chariot 520 et la table 550 et réciproquement. Cette cellule sera de plus équipée de moyens d'alimentation en boite d'échantillonnage 506, ces boites portant des récipients longiformes ou puits, prévus pour recevoir les échantillons recueillis par l'outil 1' de prélèvement sur les plantes ou plantules. Enfin la cellule pourra être équipée d'au moins un système optique tel qu'un système de visualisation permettant entre autre de vérifier la présence d'échantillons dans les récipients après chaque séquence de prélèvement.

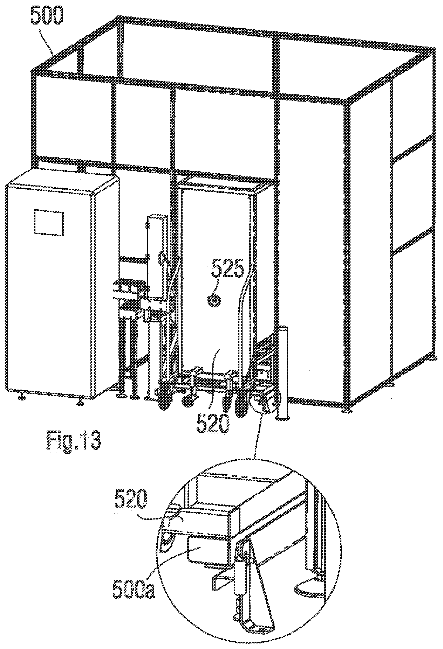

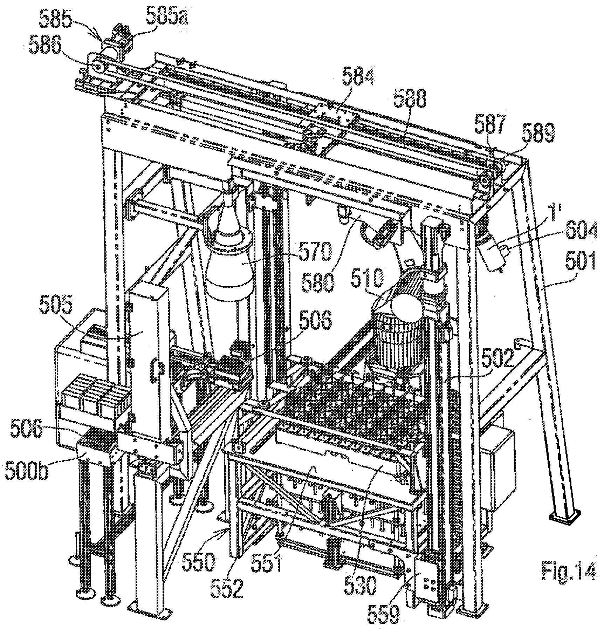

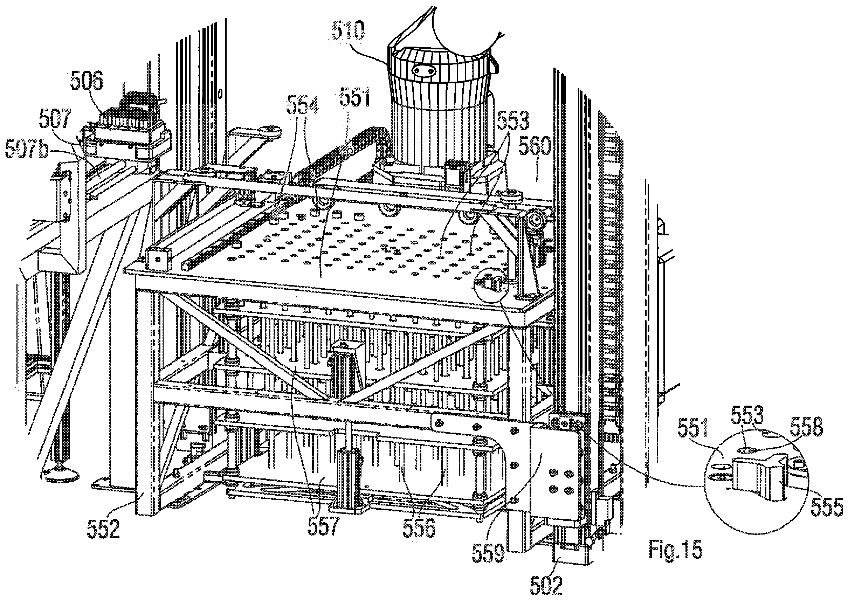

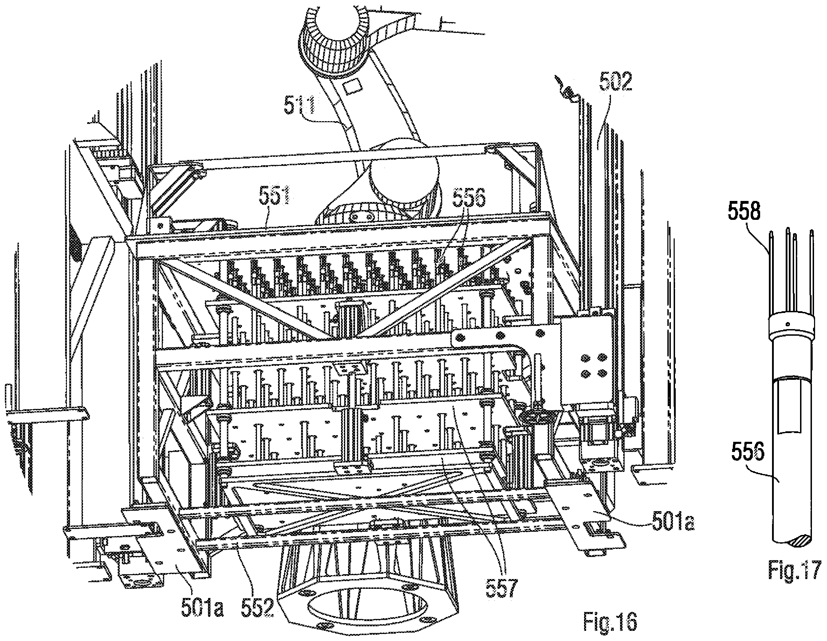

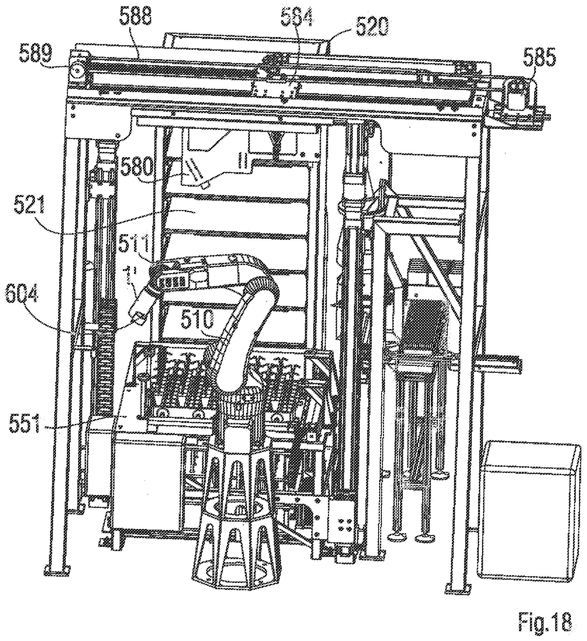

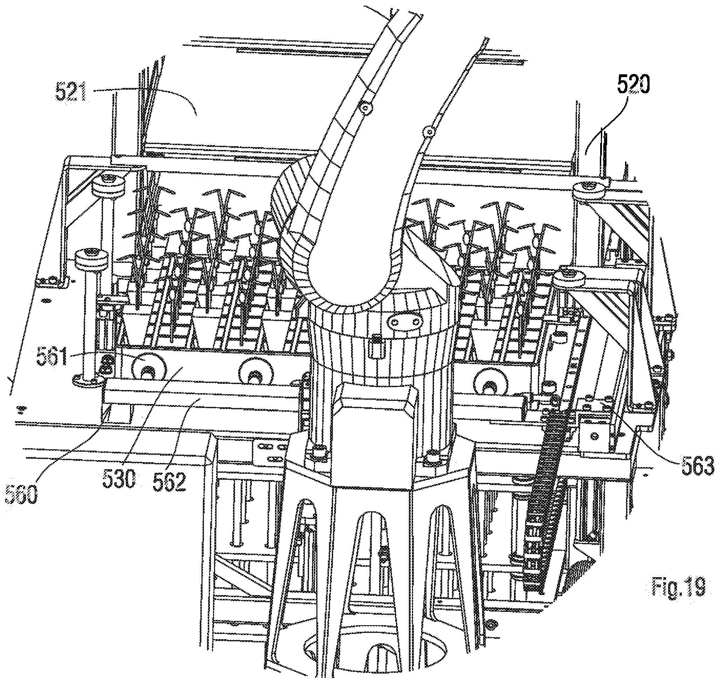

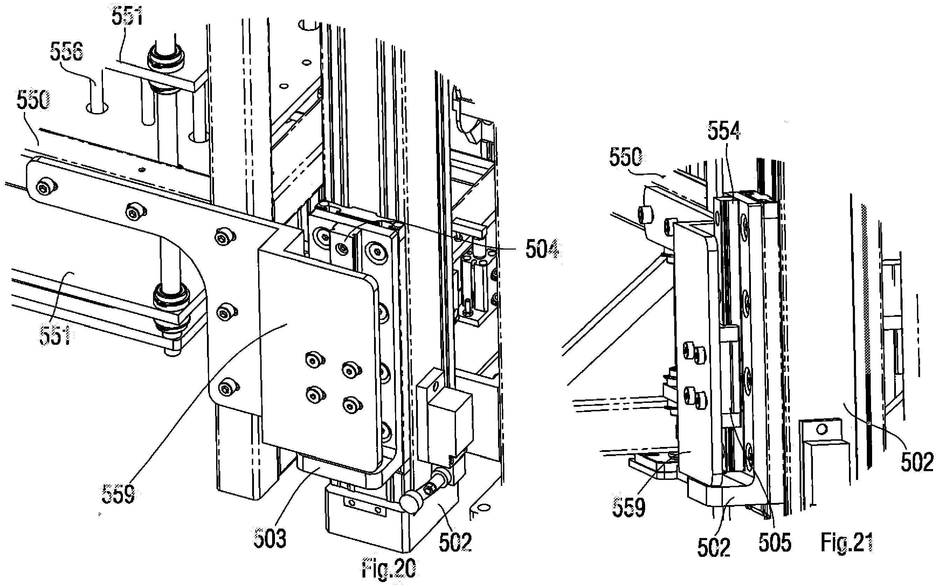

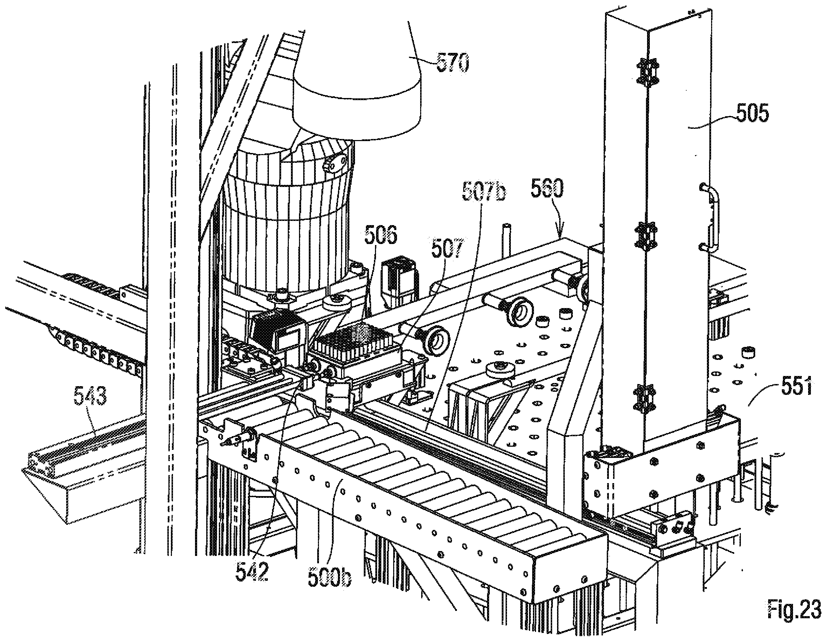

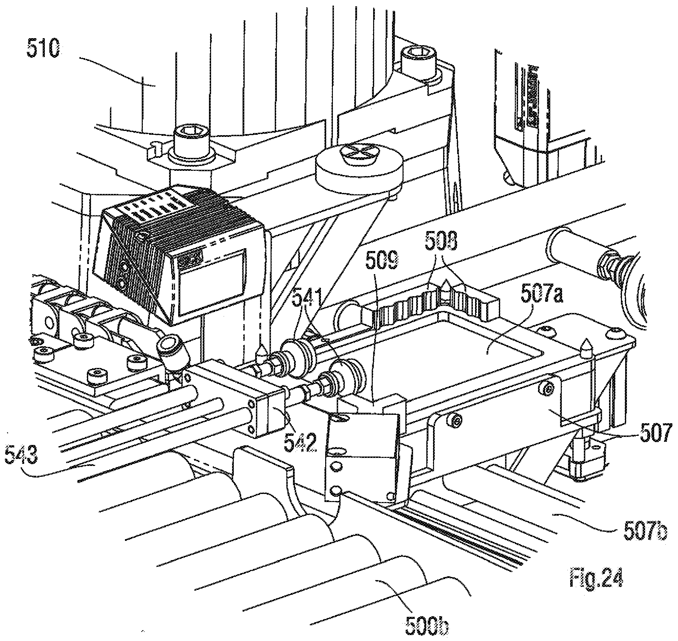

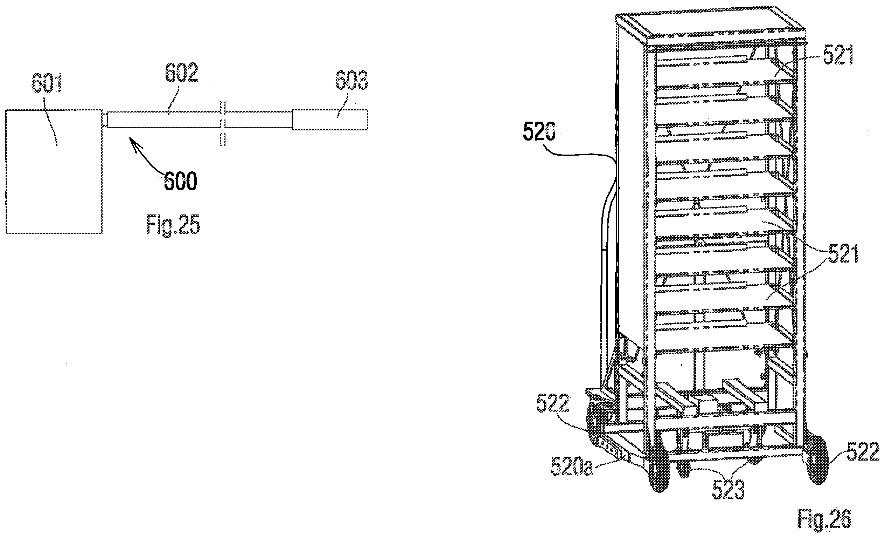

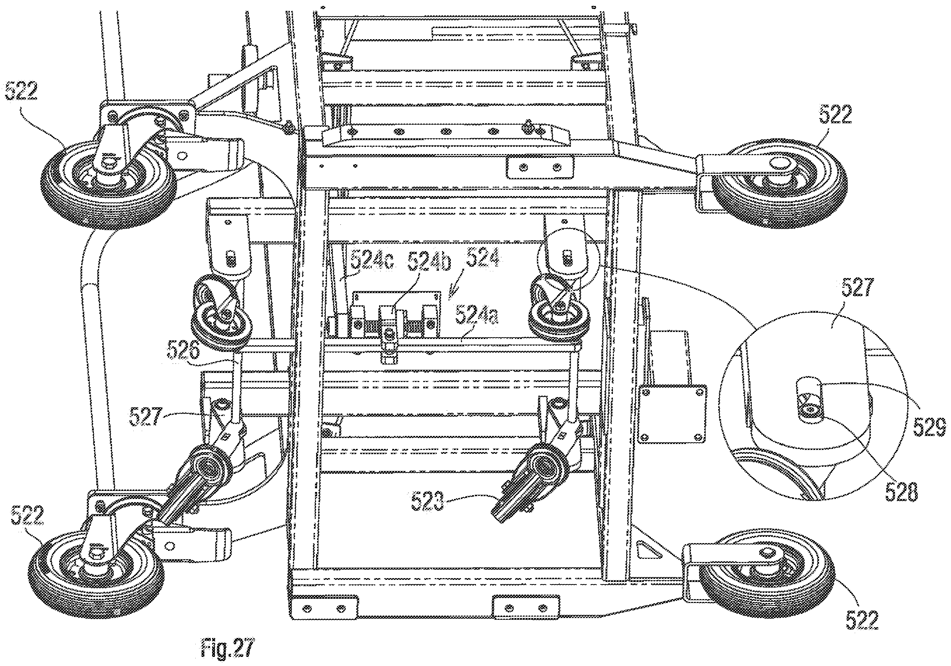

En figures 13 à 27 est montrée une cellule automatisée conforme à l'invention.

On peut voir sur ces figures, que l'enceinte de la cellule 500 comprend des parois verticales formant une enveloppe de protection autour de la table, du bras manipulateur 511 de l'automate 510 et des différents éléments de convoyage. Ainsi, cette enveloppe comprend une paroi arrière verticale, deux parois latérales et une paroi avant pourvue d'une large ouverture dans laquelle est engagé le chariot de transport des plaques alvéolées.
Face à cette paroi avant est disposée une armoire de commande dotée d'un microcontrôleur, architecturé autour d'un microprocesseur et comportant des modules mémoires recevant des logiciels adaptés. Ce microcontrôleur est apte notamment à commander et contrôler les équipements de la cellule et notamment l'automate 510, son bras manipulateur 511 et l'outil 1' porté par ce bras manipulateur.

L'une des parois latérales de cette enceinte est équipée d'une porte d'accès. Cette porte d'accès sera associée à un détecteur d'ouverture connu en soi, connecté électriquement au microcontrôleur. De cette manière un signal représentatif de l'ouverture de la porte pourra être détecté par le microcontrôleur lequel en retour agira sur les moteurs de l'automate 510 pour en commander l'arrêt immédiat. La remise en route de l'automate 510 ne pourra s'effectuer qu'à l'aide d'une commande de remise en route, externe à l'enceinte, et associée fonctionnellement au microcontrôleur. Un détecteur de présence humaine, connecté électriquement au microcontrôleur pourra aussi être disposé dans l'enceinte pour interdire tout mouvement du bras manipulateur 511 de l'automate 510 et des autres équipements de la cellule en cas de présence humaine détectée. De même, dans le volume de l'enceinte pourra être disposé un actionneur à câble. Le câble de l'actionneur se développera de manière horizontale dans l'enceinte et pourra être fixé par une de ses extrémités à un organe élastique fixé à l'une des parois latérales. Ce câble sera engagé librement dans des anneaux de maintien fixés à la paroi latérale et à la paroi arrière. Par son autre extrémité, le câble sera fixé à l'élément mobile du capteur.

La cellule comporte un châssis support 501 auquel sont fixés notamment la table support 550, les différents convoyeurs d'alimentation et d'évacuation et le ou les systèmes optiques.

Selon une forme préférée de réalisation, le châssis 501 est formé de plusieurs montants tubulaires réunis les uns aux autres par des traverses tubulaires d'entretoisement.

À ce châssis est fixée la table support 550 cette table étant positionnée face à l'ouverture avant de l'enceinte en sorte d'être disposée en regard du chariot de transport 520. La zone de la table située en regard de cette ouverture est désignée zone avant. La zone arrière de la table 550 se situe en regard de l'automate 510, ce dernier étant installé sur un support adapté, en arrière de la table support 550.

La table support 550 comprend un plateau horizontal supérieur 551 prévu pour recevoir les plaques 530 portant les plantes en motte, ce plateau supérieur 551 étant porté par un piètement 552 formé de quatre montants verticaux correctement entretoisés par des traverses horizontales.

Le plateau supérieur 551 de la table comporte des perforations traversantes 553 organisées selon un maillage de préférence identique à celui selon lequel sont organisées les perforations traversantes de la plaque alvéolée 530.

La table support 550 comporte de plus des moyens de positionnement et de maintien d'une plaque alvéolée 530 sur le plateau supérieur 551. Selon une forme préférée de réalisation, ces moyens sont constitués par des butées 554 sous forme de galets, installées sur le plateau supérieur 551. Ces butées 554 sont prévues pour recevoir en appui le bord arrière et l'un des bords latéraux de la plaque alvéolée 530. Ces butées déterminent un Vé fixe de positionnement. Additionnellement, les moyens de maintien et de positionnement comprennent une mâchoire mobile 555 déterminant un Vé mobile de positionnement disposé de manière diagonalement opposée par rapport au premier Vé fixe de positionnement. Cette mâchoire 555 est actionnée par un organe moteur, par exemple un vérin pneumatique, pour venir agir en poussée contre l'un des angles de la plaque alvéolée 530. L'effort exercé par la mâchoire 555 sur l'angle considéré de la plaque alvéolée 530 est dirigé diagonalement vers l'angle opposé. De cette façon la plaque 530 se trouve appliquée fermement contre les butées latérales et arrière 554. De plus, la table support 550 comporte des moyens pour appliquer fermement la plaque alvéolée contre le plateau de la table. Ces moyens sont constitués par une mâchoire horizontale actionnée par un organe moteur venant agir en poussée vers le bas sur la rive supérieure horizontale de la plaque support. Ces moyens de maintien et de positionnement assurent ainsi l'immobilisation temporaire de la plaque alvéolée 530 sur la table et l'alignement des perforations traversantes qu'elle comporte avec les perforations traversantes 553 que comporte le plateau 551 supérieur de la table 550.

Dans le volume défini par le piètement 552, sous le plateau supérieur 551, et dans l'alignement des perforations traversantes 553 dudit plateau supérieur, la table 550 comporte des tiges rigides verticales, élévatrices 556 prévues pour être engagées, par mouvement ascendant, dans les perçages traversants de la plaque alvéolée et dans les perçages traversants 553 du plateau supérieur 551 pour soulever les mottes et les écarter de l'alvéole correspondante. Ces tiges rigides 556 sont portées par groupes par des platines horizontales 557 mobiles en hauteur et actionnées par des organes moteurs. Chaque tige verticale 556 porte en extrémité plusieurs aiguilles de préhension 558 prévues pour être enfichées dans la motte à soulever. De cette façon la motte soulevée est fermement maintenue par ces aiguilles 558. Chaque platine 557 ne porte qu'un nombre déterminé de tiges rigides afin de ne soulever qu'une motte sur deux ou une motte sur trois ou encore une motte sur quatre. Ainsi le feuillage des plantes soulevées se trouve séparé du feuillage des plantes adjacentes. De cette façon les risques d'un prélèvement sur une plante adjacente, présents lorsque leurs feuilles ou leurs cotylédons se superposent, sont diminués.

Les platines horizontales 557 sont dotées de paliers lisses par lesquels elles sont engagées en coulissement sur des colonnes de guidage verticales, communes, fixées au piétement de la table 552.

Les organes moteurs d'actionnement des platines et des tiges qu'elles portent sont constitués par des vérins pneumatiques fixés par leur corps au piètement de la table et par leur tige à la platine 557 correspondante.

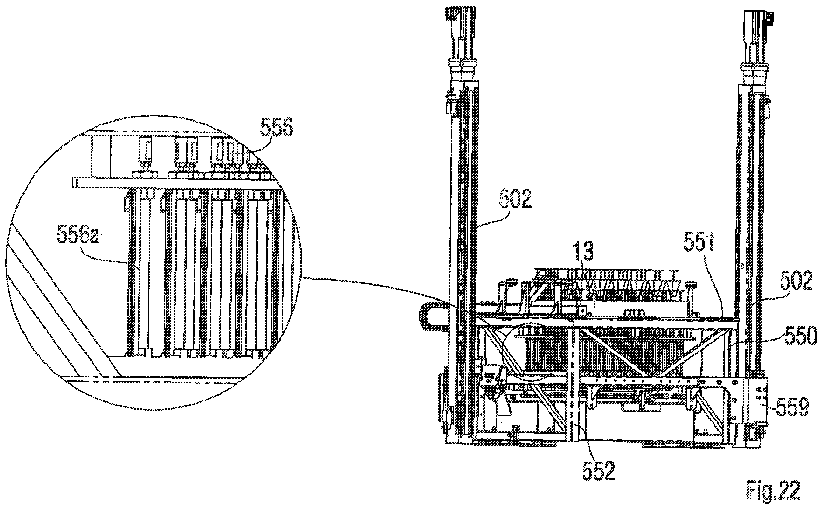

Alternativement, selon une autre forme de réalisation telle que représentée en figure 22, chaque tige rigide verticale 556 est actionnée individuellement, c'est-à-dire indépendamment des autres tiges 556, par un organe moteur 556a qui lui est propre. De préférence, cet organe moteur 556a est constitué par un vérin pneumatique alimenté en air comprimé par une source d'air comprimé installée sous le plateau supérieur 551 de la table entre les éléments du piètement 552. Le vérin pneumatique 556a est alimenté en énergie pneumatique par un distributeur, connu en soi, piloté électriquement par le microcontrôleur.

Le système de transfert 560 des plaques alvéolées 530 est apte à saisir la plaque alvéolée sur l'une des étagères 521 du chariot 562 pour l'amener sur le plateau supérieur 551 de la table 550 et, inversement, après prélèvement des échantillons, à ramener la plaque alvéolée 530 sur l'étagère 561 du chariot 562.

Selon une forme de réalisation, le système de transfert 560 est constitué par des ventouses 561 connectées à une même rampe horizontale 562 connectée à une source à dépression. Cette rampe est montée en coulissement sur au moins une glissière horizontale, occupant une position latérale sur le plateau supérieur 551 de la table 550 et s'étendant de la zone avant à la zone arrière de cette table. La rampe 562 est perpendiculaire à la glissière et est déplacée le long de cette glissière par un organe moteur 563, connu en soi, constitué par un vérin sans tige. La rampe 562, de manière opposée à la glissière, est portée par un patin de glissement formé par un bloc de tétra-fluoroéthylène.

Selon une forme de réalisation, la table 550 est mobile en hauteur afin d'amener son plateau supérieur 551 au niveau de chaque étagère 521 du chariot 520 en vue du chargement ou de la dépose d'une plaque alvéolée 530.

A cet effet, au piètement 552 de la table 550 sont fixés deux bras de levage 559, diagonalement opposés, et le châssis 501 de la cellule 500 est doté de deux rails de guidage verticaux 502 intégrant chacun un organe moteur d'actionnement d'un pied de levage 503. Ce pied de levage 503 coopére en coulissement avec le rail de guidage 502. Les deux bras de levage 559 sont respectivement portés par les deux pieds de levage 503 et sont solidaires respectivement de ces deux pieds de levage 503 par l'intermédiaire d'une monture flottante, autorisant un mouvement vertical de coulissement du bras de levage 559 par rapport au pied 503 qui le porte. De par cette disposition, lorsque le piètement 552 de la table 550 parvient au sol, les pieds 503 peuvent poursuivre leur course descendante le long du rail 502. Ainsi la table 550, en position basse, pourra être posée par son piètement sur un plan de référence fixe du châssis de la cellule de prélèvement. Ce plan de référence sera avantageusement formé par deux semelles d'appui 501a installées fixement au sol. Dans sa position basse d'appui sur les semelles 501a, il est nécessaire que la table 550 soit centrée par rapport à ce plan. Dans cette optique, chaque semelle 501a présente des douilles de positionnement dotées chacune d'un alésage conique ouvert vers le haut et le piétement 552 de la table support 500, en regard des douilles, présente des pions de positionnement de forme conique. Chaque pion est prévu pour être engagé, en position basse de la table 500, dans l'alésage de la douille correspondante.

Avantageusement chaque pied de levage 502 comprend une aile verticale montée en coulissement dans le rail de guidage vertical 502 et fixée à l'organe moteur intégré à ce dernier et une aile horizontale inférieure sur laquelle prend appui le bras de levage 559 correspondant lors du levage de la table 550. La monture flottante est formée d'un rail de guidage 504, vertical, fixé rigidement au pied de levage et d'un coulisseau 505 engagé en coulissement sur le rail de guidage 504 et fixé au bras de levage 559. Le rail de guidage 504 et le coulisseau 505 coopèrent l'un avec l'autre par des rainures de guidage et des formes de tenon en queue d'aronde.

La cellule 500 comporte des moyens d'alimentation en boîte d'échantillonnage 506. Ces moyens sont constitués par un magasin 505 de boîte d'échantillonnage 506. Ce magasin, par exemple sous forme de colonne, reçoit une pile verticale de boîtes d'échantillonnage 506. Ce magasin est doté en partie inférieure d'une ouverture de délivrance par laquelle la boîte inférieure de la pile peut être délivrée. A ce magasin 505 sont associés des éléments de rétention inférieurs, actionnés entre une position d'effacement et une position de rétention par des organes moteurs constitués par des vérins pneumatiques. Addtionnellement, au magasin sont associés deux autres éléments de rétention actionnés par des organes moteur pour retenir la pile de boîte lors de la distribution de la dernière boîte 506.

Le magasin 505 est disposé au-dessus du trajet d'une nacelle de transport 507 portée par un vérin sans tige 507b s'étendant depuis le magasin 505 vers une zone de stationnement et de recueil des échantillons prélevés par l'outil 1'. Cette nacelle 507 est dotée d'une empreinte en creux 507a prévue pour recevoir la boîte d'échantillonnage 506. Une telle disposition d'empreinte assure le maintien de la boîte d'échantillonnage 506 sur la nacelle 507 lors du transport depuis le magasin 505 vers la zone de stationnement et de recueil des échantillons. De préférence, le vérin sans tige 507b occupe une position latérale par rapport à la table support 550.

La zone de stationnement et de recueil des échantillons, est dotée de moyens de positionnement et de maintien de la boîte d'échantillonnage 506, ces moyens étant constitués par une première mâchoire fixe en Vé 508 installée fixement sur ladite aire de stationnement et par une seconde mâchoire mobile en Vé 509. Ces mâchoires agissent toutes en poussée sur deux angles diagonalement opposés de la boîte d'échantillonnage 506. La mâchoire mobile 509 est actionnée par un organe moteur tel un vérin pneumatique.
Ainsi la boîte d'échantillonnage 506 se trouve parfaitement maintenue dans une position propice à recevoir les échantillons prélevés sur les plantules par l'outil 1' de prélèvement. En vue de la dépose dans le récipient correspondant de l'échantillon prélevé, l'outil 1' est amené à pénétrer de quelques millimètres dans le récipient.

De manière attenante à la zone de stationnement et au vérin d'actionnement 507b de la nacelle de transport 507 des boîtes d'échantillonnage 506, est disposé un convoyeur 500b, d'évacuation desdites boîtes 506 vers une zone de réception. Ce convoyeur 500b est disposé légèrement en pente pour évacuer les boîtes d'échantillons vers la zone de réception.

Entre la zone de stationnement et le convoyeur d'évacuation 500b est disposé un moyen de transfert 540 apte d'abord à saisir la boîte d'échantillonnage 506 présente dans la zone de stationnement et ensuite à transférer cette boîte 506 vers le convoyeur d'évacuation 500b.

Selon une forme de réalisation, ce moyen de transfert 540 comprend des ventouses 541 portées par un boîtier 542 dont la chambre interne est en relation de communication d'une part avec une source à dépression et d'autre part avec les ventouses. Le moyen de transfert 540 comprend en outre un moteur d'actionnement 543 par exemple un vérin pneumatique auquel est fixé le boîtier 542.

Avantageusement la paroi de fond de la nacelle de transport 507, paroi sur laquelle repose la boîte à échantillonnage 506, est transparente à la lumière et la boite d'échantillonnage 506 et les récipients ou puits qu'elle porte sont également transparents à la lumière. Additionnellement, la nacelle 507 intègre une source de rétro-éclairage apte à éclairer la boîte d'échantillonnage par le dessous. De plus, au-dessus de la zone de stationnement et de recueil des échantillons, à la verticale de ladite zone, est disposé un système de vision télécentrique 570, par lequel peut être observé le bon remplissage en échantillons des récipients ou puits que comporte la boîte d'échantillonnage 506 disposé sur l'aire de stationnement. Ce système de vision 570 est connecté au microcontrôleur que comporte la cellule.

La cellule 500 comporte de plus une monture 580 portant deux systèmes optiques orientés vers la table support. Cette monture 580 et les systèmes qu'elle porte sont déplaçables horizontalement au-dessus et à distance de la table 550, par exemple selon une direction perpendiculaire à la direction de déplacement de la plaque alvéolée 530 sur le plateau supérieur 551 de la table 550. L'un des systèmes optiques est constitué par une première caméra de visualisation 581. L'axe optique de cette caméra est vertical. L'autre système optique est constitué par une camera stéréoscopique ou caméra 3D, 582 et par une source 583 de rayon laser. L'axe optique de la caméra stéréoscopique est incliné par rapport à la verticale tandis que l'axe optique de la source laser est vertical. La caméra 581 ou caméra 2D permet de contrôler la viabilité de la plantule, tandis que la caméra 582, en association avec la source de rayon laser 583, permet l'obtention d'une représentation tridimensionnelle des plantules via la déformation de la ligne laser. En vue de ce contrôle et de l'obtention d'images, la monture 580 est déplacée au-dessus de la plaque alvéolée 530, cette dernière et les plantules qu'elle porte étant éclairées dans leur ensemble, par le rayon laser.

La monture 580 est portée par un chariot 584 monté sur des rails supérieurs horizontaux de guidage fixés au châssis 501 de la cellule 500. Ce chariot 584 est déplaçable le long de ces rails par un ensemble moteur 585 comportant un moteur électrique 585a à arbre de sortie rotatif et une transmission de mouvement à pignons crantés 586, 587 et courroie crantée 588. L'un des deux pignons, le pignon menant 586, est fixé à l'arbre de sortie du moteur électrique 586a tandis que l'autre, le pignon mené 587 est fixé à un axe engagé dans des paliers portés par une chape fixée au châssis 501 de la cellule 500. La courroie crantée 588 est fixée au chariot 584.
L'axe du pignon menant 587, au-delà de l'un de ses paliers est accouplé à un codeur 589 connu en soi connecté électriquement au microcontrôleur. Cette disposition permet de déterminer la position de la monture 580 le long des rails.

Avantageusement à la cellule 500 est associé un réservoir, non représenté, prévu pour contenir une solution de lavage de l'outil de prélèvement 1'. Ainsi après un nombre déterminé de prélèvement l'outil de prélèvement 1' sera plongé par l'automate 510 dans cette solution de lavage. Le lavage périodique de l'outil 1' permet de réduire le risque que l'échantillon prélevé demeure collé dans la matrice 3 de cet outil 1'. Ce récipient de lavage pourra être porté par la table support 550.

Au microcontrôleur sont connectés par l'intermédiaire d'interfaces adaptées, les différents équipements électriques de la cellule 500, ces équipements électriques étant de manière non limitative, l'automate 510 et ses différents moteurs, les pilotes électriques des différents vérins pneumatiques, le moteur que comporte chaque rail 502, le moteur 585a de déplacement de la monture 580, les différents capteurs de fins de course associés aux éléments en mouvement que comporte la cellule ainsi que les différents détecteurs de présence. Au microcontrôleur sont également connectés les différents systèmes optiques en vue d'une analyse d'images.

Cette cellule 500 sera équipée avantageusement de lecteurs d'identifiants connus en soi. Ces identifiants seront portés par les plaques alvéolées 530 et par les boîtes d'échantillonnage 506. Ces identifiants pourront être constitués par des étiquettes portant des codes barres, par des puces RFID, ou par tout autre identifiant. Le lecteur d'identification des plaques alvéolées sera avantageusement porté par la table support 550. De cette façon, le code d'identification de la plaque 530 pourra être lu avant transfert vers la table support 550 et un message d'erreur pourra alors être généré par le microcontrôleur dans le cas d'une plaque alvéolée 530 non conforme. Ces lecteurs d'identifiants seront connectés au micro contrôleur. Par ces moyens et à l'aide d'un logiciel adapté, il sera maintenant possible d'assurer le traçage des échantillons prélevés. Pour faciliter ce traçage, la répartition des puits ou récipients que comporte chaque boîte d'échantillonnage 506 reproduira à échelle réduite la répartition des alvéoles de chaque plaque alvéolée 530 et les boîtes d'échantillonnage 506, au moins dans la zone de stationnement et de recueil des échantillons, seront disposées en sorte que les lignes et colonnes que forme la répartition des puits ou récipients soient parallèles respectivement aux lignes et colonnes que forme la répartition des alvéoles de plaque alvéolée 530. De telles dispositions établissent une relation entre la position de chaque alvéole et la position de chaque puits ou récipient afin que le prélèvement d'un échantillon dans l'un des alvéoles se traduise par le dépôt de cet échantillon dans le récipient homologue. Ainsi le contrôle en continu opéré par le biais du système de vision télécentrique 570 permettra de détecter non seulement les manques d'échantillon dans les puits, mais aussi de détecter un dépôt dans un puits déjà garni, ou un dépôt dans un puits non destiné à recevoir l'échantillon considéré ou bien encore, un dépôt correct dans le puits homologue de l'alvéole prélevée. En cas de dépôt non conforme détecté, le microcontrôleur sera apte à générer un signal d'erreur et à interrompre tout prélèvement d'échantillon.

L'identification des plaques alvéolées 530 et des boîtes d'échantillonnage 506 permet d'établir une association entre une plaque 530 et une boîte 506. Ainsi la lecture de l'identifiant de la boîte d'échantillonnage 506, présente sur l'aire de stationnement et de recueil d'échantillons, déclenchera par le microcontrôleur la recherche de la plaque 530 correspondante. Cette recherche sera opérée par déplacement en hauteur de la table support 550 face au chariot 520 et par la lecture de l'identifiant de la plaque portée par chaque étagère 521.

La lecture de l'identifiant, ou d'un repère spécifique, pour notamment ce qui concerne la boîte d'échantillonnage 506, permet de s'assurer de son bon positionnement. Il n'est pas cependant souhaitable d'interrompre le prélèvement en cas de mauvais positionnement de cette boîte 506. Pour cette raison, le microcontrôleur et son logiciel adapté seront aptes à tenir compte de ce mauvais positionnement en vue d'une distribution conforme d'échantillons dans les puits de la boîte d'échantillonnage.

La cellule automatisée 500 pourra recevoir un moyen 600 d'élimination des plantes en motte par aspiration. Ce moyen pourra être constitué par une centrale d'aspiration 601 comprenant une bouche d'aspiration en relation de communication avec un conduit d'aspiration 602 portant à distance de la centrale, un embout d'aspiration 603. Cet embout d'aspiration 603 pourra être engagé de manière amovible dans un collier 604 porté par le bras manipulateur 511, ou comme représenté sur les figures jointes, par l'outil de prélèvement 1'.

Un tel moyen sera utilisé pour détruire les plantes non sélectionnées après analyse de leur ADN ou de leur ARN. En vue de cette destruction, les données relatives aux plantes écartées et aux plaques alvéolées qui les portent seront transmises par tout moyen adapté au microcontrôleur, et les plaques alvéolées 530 concernées seront de nouveau chargées sur le moyen de transport 520 pour être transportées vers la cellule automatisée 500 pour être ensuite transférées par le système de transfert 560 vers la table support 550 afin que les plantes ou plantules non retenues, soient retirées des alvéoles correspondants de la plaque alvéolée 530, par aspiration. A cet effet le bras manipulateur 511 positionnera l'embout d'aspiration 603 au droit de la plantule à éliminer et l'aspiration sera activée afin que la plantule soit extraite de l'alvéole correspondant de la plaque 530.

L'ouverture avant de l'enceinte de la cellule 500 est associée à deux éléments de guidage formant un Vé de positionnement du chariot de transport 520 des plaques alvéolées 530. Ces éléments de guidage sont fixés au sol et présentent au-dessus du sol, deux rebords horizontaux d'appui 500a, prévus pour recevoir en appui deux éléments latéraux d'appui 520a que comporte le chariot 520.

Ce chariot de transport 520 est constitué d'un châssis portant à intervalle régulier les étagères support 521 des plaques alvéolées 530. Ce châssis est équipé des deux éléments d'appui latéraux 520a, sous forme de bras, prévus pour venir en appui sur les deux rebords horizontaux 500a associés à l'ouverture avant de l'enceinte.
Avantageusement, le chariot présente deux jeux d'organes de roulement 522, 523 dont un est utilisable pour un déplacement à l'extérieur et l'autre pour un déplacement à l'intérieur et notamment aux abords de la cellule. On réduit de cette façon les risques de pollution des échantillons par des agents externes.

Un des deux jeux d'organes de roulement 522 est fixé directement au châssis du chariot 520 tandis que l'autre 523 est porté par un système de monte et baisse 524, solidaire du châssis et actionné par exemple par une manivelle 525. Par actionnement du système de monte et baisse, les organes de roulement 523, sont amenés en appui au sol afin d'écarter du sol les organes de roulement 522 par soulèvement du chariot 520. Dans cette position, les éléments d'appui 520a se trouvent situés selon un niveau de hauteur supérieur par rapport aux deux rebords 500a et le chariot 520 peut librement être introduit entre les deux éléments de guidage. Une butée fixée au sol limite la course du chariot 520 vers la table support 550. Après introduction du chariot 520, le système de monte et baisse et de nouveau actionné dans le sens de l'abaissement du chariot 520 afin que les deux éléments latéraux d'appui 520a puisse venir en appui sur les deux rebords d'appui 500a. Ainsi le chariot 520 se trouve immobilisé face à la table support 550, sous l'effet de son propre poids.

Le système de monte et baisse comprend deux essieux 526 sur chacun desquels sont installés deux organes de roulement 523, ces essieux étant portés en fixation chacun en extrémité de deux biellettes 527 articulées au châssis du chariot 520. Chaque organe de roulement 523 présente un axe par lequel il est fixé à l'essieu correspondant. Cet axe comporte un pion 528 engagé dans une coulisse 529 pratiquée dans une patte du châssis du chariot. Ces essieux sont solidaires d'un bras de manoeuvre 524a commun fixé à l'écrou d'un mécanisme à vis et écrou 524b dont la vis est manoeuvrée par la manivelle 525 par l'intermédiaire d'une transmission de mouvement à pignons crantés et courroie crantée 524c. L'un des pignons est en prise avec la manivelle 525, l'autre pignon est en prise avec la vis du mécanisme vis et écrou 524b. La courroie 524c est montée sur les deux pignons crantés.

Alternativement le moyen de transport des plaques alvéolées 530 entre l'aire de stockage et/ou de croissance des plantes et la cellule automatisée de prélèvement d'échantillons 500, et, inversement, entre cette cellule 500 et ladite aire est constitué par un convoyeur par exemple à rouleaux motorisés, ledit convoyeur étant prévu pour permettre le déplacement des plaques alvéolées 530 depuis ladite aire de stockage vers la cellule 500, puis leur retour vers leur aire de stockage une fois le prélèvement effectué, par exemple selon un circuit fermé. Il est évident que tout autre type de convoyeur par exemple à bande sans fin, à rouleaux, à chaîne, à galets, pourra être utilisé pour le transport des plaques alvéolées 530.

De même tout moyen de transport autre qu'un chariot tel que décrit et un convoyeur pourra être utilisé.

Il va de soi que la présente invention peut recevoir tous aménagements et variantes du domaine des équivalents techniques sans pour autant sortir du cadre du présent brevet tel que défini par les revendications ci-après.

## Revendications

1. Outil (1') de prélèvement, préférentiellement de tissus végétaux, comprenant :
- un corps de guidage (1) doté d'un alésage traversant (10),
- un poinçon emporte pièce (2) monté en ajustement glissant dans l'alésage traversant (10) du corps de guidage, ledit poinçon comportant une arête inférieure (20) de contour fermé, formant arête de coupe,
- une matrice emporte pièce (3), solidaire du corps de guidage (1), disposée sous ce dernier et séparée dudit corps par une ouverture (4) d'introduction du végétal à découper, ladite matrice (3) étant pourvue dans l'alignement axial de l'alésage traversant (10) du corps de guidage (1), d'un alésage traversant (30) dans lequel pénètre l'extrémité inférieure (20) du poinçon (2) lors de la découpe de l'échantillon à prélever, ladite ouverture d'introduction (4) étant limitée par une face inférieure correspondant à la face supérieure (32) de la matrice (3), par une face supérieure correspondant à la face inférieure (15) du corps de guidage (1) et par une face verticale arrière (310) d'une paroi (31) liant la matrice (3) au corps de guidage (1), ledit alésage (30) étant pourvu d'une bordure supérieure de contour fermé formant arête de coupe, **caractérisé par**
- un moyen d'actionnement du poinçon (2) entre une position initiale selon laquelle il est rétracté dans le corps de guidage (1), une position intermédiaire, stable d'arrêt temporaire, selon laquelle le poinçon (2) par son arête inférieure (20) est situé dans l'alésage (30) de la matrice (3) et une position finale selon laquelle il traverse de part en part la matrice (3) et selon laquelle son arête inférieure est externe à l'alésage traversant (30) de la matrice (3), et en ce que le contour de chaque partie arrière des sections droites de la partie inférieure du poinçon (2) et de l'alésage (30) de la matrice (3) est tangent à un plan géométrique vertical contenant la face arrière (310) de l'ouverture (4).

2. Outil (1') de prélèvement selon la revendication précédente, **caractérisé en ce que** la trajectoire du poinçon (2) est tangente à la face verticale arrière (310) de l'ouverture (4) et que l'alésage traversant (30) de la matrice (3) est tangent à un plan géométrique contenant ladite face arrière (310) afin de réaliser dans le végétal dont l'échantillon est prélevé une découpe à contour ouvert.

3. Outil (1') de prélèvement selon la revendication précédente, **caractérisé en ce que** la section droite de la partie inférieure du poinçon (2) et la section droite de l'alésage (30) de la matrice (3) présentent chacune une partie avant et une partie arrière, la partie avant étant plus large que la partie arrière.

4. Outil (1') de prélèvement selon l'une quelconque des revendications précédentes, **caractérisé par** des moyens d'éjection d'un fluide gazeux ou d'un fluide liquide ou d'un mélange des deux en extrémité inférieure du poinçon (2).

5. Outil (1') de prélèvement selon la revendication précédente, **caractérisé en ce que** les moyens d'éjection comprennent une tête (7) d'alimentation en fluide gazeux ou liquide, un canal interne (21) de distribution d'un fluide gazeux et/ou liquide, formé dans le poinçon (2), en relation de communication avec la tête d'alimentation (7) et au moins un ajutage (21a) formé dans la partie inférieure du poinçon (2) et débouchant dans la face inférieure de ce dernier ledit ajutage (21a) étant en relation de communication avec le canal interne (21) du poinçon (2).

6. Outil (1') de prélèvement selon la revendication précédente, **caractérisé en ce que** le canal interne (21) reçoit une canule (8) de distribution de fluide gazeux et/ou liquide, en relation de communication d'une part avec la tête d'alimentation (7) et d'autre part avec le ou chaque ajutage (21a).

7. Outil (1') de prélèvement selon la revendication précédente, **caractérisé en ce que** le diamètre de la canule (8) est plus faible que le diamètre du canal (21) afin de ménager entre ladite canule (8) et ledit canal (21) une voie de passage au fluide gazeux et/ou liquide, cette voie de passage étant en relation de communication d'une part avec la tête d'alimentation (7) et d'autre part avec le ou chaque ajutage (21a) du poinçon (2).

8. Outil (1') de prélèvement selon l'une quelconque des revendications précédentes, **caractérisé en ce que** le moyen d'actionnement est un moyen moteur (5) possédant un élément de sortie (50) à déplacement linéaire, sur lequel un effort et un mouvement de déplacement sont disponibles.

9. Outil (1') de prélèvement selon l'une quelconque des revendications 5 à 7 , **caractérisé en ce qu'**il présente un carter de protection (6) doté d'une embase inférieure (60) à laquelle est fixé le corps de guidage (1), que le poinçon (2) est fixé en extrémité inférieure d'une conduite cylindrique rigide (9) engagée en ajustement glissant dans le volume interne du carter de protection (6) de façon à y être guidée en coulissement selon un axe vertical, que le volume interne de cette conduite (9) est en relation de communication avec le canal (21) que comporte le poinçon (2) et est en relation de communication avec la tête (7) d'alimentation en fluide, cette dernière étant portée, extérieurement au carter de protection (6), par la conduite (9).

10. Automate (510) pour le prélèvement d'échantillons, **caractérisé en ce qu'**il comprend un bras manipulateur (511), éventuellement multiaxes, portant l'outil (1') de prélèvement selon l'une des revendications 1 à 9.

11. Cellule automatisée (500) de prélèvement d'échantillons, **caractérisée en ce qu'**elle comprend :
- une table support (550) pour recevoir des plaques alvéolées (530) portant des plantes en motte à échantillonner,
- un automate (510) doté d'un bras manipulateur (511) et,
- un outil de prélèvement (1') d'échantillon selon l'une des revendications 1 à 9 porté par le bras manipulateur (511) de l'automate (510).

12. Cellule automatisée (500) selon la revendication précédente, **caractérisée en ce que** la table support (550) comporte un système de transfert (560) de plaques alvéolées (530), apte à assurer le transfert des plaques alvéolées (530) entre la table support (550) et un moyen de transport (520) des plaques alvéolées et réciproquement.

13. Cellule automatisée (500) selon la revendication précédente, **caractérisée en ce que** table support (550) comprend un piètement (552) sur lequel est installé un plateau horizontal (551) supérieur prévu pour recevoir chaque plaque alvéolée (530) du moyen de transport (520), et des moyens de positionnement et de maintien d'une plaque alvéolée (530) sur le plateau supérieur (551).

14. Cellule automatisée (500) selon la revendication précédente, **caractérisée en ce que** le plateau supérieur (551) de la table comporte des perforations traversantes (553) organisées selon un maillage identique à celui selon lequel sont organisées les perforations traversantes de la plaque alvéolée et que ladite table (550), sous le plateau supérieur (551) et dans l'alignement des perforations traversantes (553) dudit plateau supérieur, comporte des tiges rigides verticales (556) élévatrices prévues pour être engagées, par mouvement ascendant, dans les perçages traversants du plateau supérieur (551) et de la plaque alvéolée pour soulever les mottes et les écarter de l'alvéole correspondante.

15. Cellule automatisée (500) selon l'une quelconque des revendications 13 ou 14, **caractérisée en ce qu'**au piètement (552) de la table sont fixées deux bras de levage (559), diagonalement opposées, et que le châssis (501) de la cellule est doté de deux rails de guidage verticaux (502) intégrant chacun un organe moteur d'actionnement d'un pied de levage (503) coopérant en coulissement avec le rail de guidage (502), les deux bras de levage (559) étant respectivement portés par les deux pieds de levage (503) et étant solidaires respectivement de ces deux pieds de levage par l'intermédiaire d'une monture flottante autorisant un mouvement vertical de coulissement du bras de levage (559) par rapport au pied qui le porte.

16. Cellule automatisée (500) selon l'une quelconque des revendications 13 à 15, **caractérisée par** une aire de stationnement de boîtes d'échantillonnage (506) et de recueil d'échantillons cette aire de stationnement étant équipée de moyens (508, 509) de positionnement et de maintien d'une boîte d'échantillonnage (506).

17. Cellule automatisée (500) selon la revendication précédente, **caractérisée en ce que** la boîte d'échantillonnage (506) est portée par une nacelle (507) mobile entre un magasin (505) et l'aire de stationnement et de recueil d'échantillons, ladite nacelle (507) étant pourvue d'une empreinte en creux (507a) prévue pour recevoir une boîte (506), la paroi de fond de la nacelle de transport (507), étant transparente à la lumière, la nacelle intégrant une source de rétro-éclairage apte à éclairer la boîte d'échantillonnage (506) par le dessous et au-dessus de la zone de stationnement et de recueil des échantillons, à la verticale de ladite zone, étant disposé un système de vision télécentrique (570), par lequel peut être observé le bon remplissage en échantillons des récipients ou puits portés par la boîte d'échantillonnage (506).

18. Cellule automatisée (500) selon l'une quelconque des revendications 11 à 17, **caractérisée par** une monture (580) portant deux systèmes optiques orientés vers la table support (550), que cette monture et les systèmes qu'elle porte sont déplaçables horizontalement au-dessus et à distance de la table, que l'un des systèmes optiques (587) est constitué par une première caméra et que l'autre système optique est constitué par une camera stéréoscopique (582) et par une source de rayon laser (583).

19. Procédé pour le prélèvement d'un échantillon mettant en oeuvre un outil (1') selon l'une quelconque des revendications 1 à 9, **caractérisé en ce qu'**il comprend les étapes suivantes :
a) le déplacement de l'outil (1') vers une plante préalablement choisie ou alternativement le déplacement de la plante vers l'outil (1'),
b) l'engagement de l'ouverture (4) de part et d'autre de l'une des feuilles de cette plante,
c) la découpe d'un échantillon par poinçonnage de la feuille et ce par mouvement du poinçon (2) depuis sa position initiale vers sa position intermédiaire,
d) le maintien du poinçon (2) de l'outil (1') en position intermédiaire, afin de maintenir l'échantillon dans l'alésage traversant (30) de la matrice (3),
e) le retrait de l'outil (1') ou alternativement de la plante, tout en assurant le maintien du poinçon de l'outil (1') en position intermédiaire,
f) le dépôt de l'échantillon dans un récipient approprié et dédié.

20. Procédé pour l'analyse des échantillons, mettant en oeuvre un outil (1') selon l'une quelconque des revendications 1 à 9, **caractérisé en ce qu'**il comprend les étapes du procédé pour le prélèvement d'un échantillon conforme à la revendication précédente, et une étape d'analyse des échantillons, notamment l'analyse de leur ADN.

## Patentansprüche

1. Tool (1') zur Probenentnahme hauptsächlich von Pflanzengewebe, mit:
- einem Führungskörper (1), ausgestattet mit einer Durchgangsbohrung (10),
- einem Stempel zum Halten von Teilen (2), befestigt mit einer Gleitjustierung in der Durchgangsbohrung (10) des Führungskörpers, wobei der besagte Stempel eine Unterkante (20) mit geschlossenen Konturen aufweist und eine Schneidkante formt,
- einer Matrize zum Halten von Teilen (3), gesichert am Führungskörper (1), positioniert unterhalb Letztgenanntem und getrennt vom besagten Körper durch eine Einführungsöffnung (4) zum Schneiden der Pflanze, besagte Matrize (3) mitgeliefert, in axialer Ausrichtung mit der Durchgangsbohrung (10) der Führungskörpers (1), mit einer Durchgangsbohrung (30), in welche das untere Ende (20) des Stempels (2) beim Schneiden einer Probe eindringt, wobei besagte Einführungsöffnung (4) begrenzt wird durch eine Unterseite, die zur Oberseite (32) der Matrize (3) passt, durch eine Oberseite, die zur Unterseite (15) des Führungskörpers passt und durch eine vertikale Rückseite (310) einer Wand (31), welche die Matrize (3) mit dem Führungskörper (1) verbindet, wobei die besagte Bohrung (30) eine Oberkante mit geschlossener Kontur hat und eine Schneidkante bildet, worin
- eine Vorrichtung zur Bedienung des Stempels (2) enthalten ist, zwischen der Anfangsposition, wobei er in den Führungskörper zurückgezogen (1) wird, einer stabilen mittleren Position mit temporärem Stopp, wobei der Stempel (2) durch seine Unterkante (20) in der Bohrung der Matrize (3) platziert wird sowie einer finalen Position, wobei er direkt durch die Matrize (3) gleitet, wobei seine Unterkante sich außerhalb der Durchgangsbohrung (30) des Stempels (3) befindet,
und wobei die Konturen allen Rückseitenteile der Querschnitte der Unterteile des Stempels (2) und der Bohrung (30) der Matrize (3) tangential zur vertikalen geometrischen Fläche ist und die Rückseite (310) der Öffnung (4) enthält.

2. Tool (1') zur Probenentnahme wie im vorherigen Punkt beschrieben, wobei die Bahn des Stempels (2) tangential zur vertikalen Rückseite (310) der Öffnung (4) ist und die Bohrung (30) der Matrize (3) tangential zur geometrischen Fläche, welche die besagte Rückseite (310) enthält, um somit an der Pflanze, von welcher die Probe entnommen wird, einen Schnitt mit offener Kontur zu erreichen.

3. Das Tool (1') zur Probenentnahme wie im vorherigen Punkt beschrieben, worin der Querschnitt des Stempelunterteils (2) und der Querschnitt der Bohrung (30) der Matrize (3) beide je einen Vorder- und einen Hinterteil enthalten, wobei der Vorderteil breiter sein muss.

4. Tool (1') zur Probenentnahme wie in den vorherigen Punkten beschrieben, mit Vorrichtungen zum Ausstoß von Gasen oder Flüssigkeiten - oder einer Mischung aus beiden - am unteren Ende des Stempels (2).

5. Tool (1') zur Probenentnahme wie im vorherigen Punkt beschrieben, wobei die Ausstoßvorrichtung einen Zuführkopf (7) für Gas oder Flüssigkeiten enthält, einen internen Kanal (21) zur Dosierung von Gas und/oder Flüssigkeiten, die sich im Stempel (2) ansammeln, verbunden mit dem Zuführkopf (7) und mit mindestens einer Düse (21a), befindlich in der Unterseite des Stempels (2) und von dort hochgehend in die Oberseite, wobei die besagte Düse (21a) mit dem internen Kanal (21) des Stempels (2) verbunden ist.

6. Tool (1') zur Probenentnahme wie in den vorherigen Punkten beschrieben, wobei der interne Kanal (21) eine Kanüle (8) zur Dosierung von Gas und Flüssigkeiten erhält, die einerseits mit dem Zuführkopf (7) und andererseits mit dieser oder jeder Düse (21a) verbunden ist.

7. Tool (1') zur Probenentnahme wie in den vorherigen Punkten beschrieben, wobei der Querschnitt der internen Kanüle (8) kleiner ist als der Querschnitt des Kanals (21) um zwischen der besagten Kanüle (8) und dem besagten Kanal (21) einen Weg für Gase und/oder Flüssigkeiten zu formen, wobei dieser Weg einerseits mit dem Zuführkopf (7) und andererseits mit dieser oder jeder Düse (21a) des Stempels (2) verbunden ist.

8. Tool (1') zur Probenentnahme wie in den vorherigen Punkten beschrieben, wobei die eigentliche Vorrichtung eine Motorvorrichtung (5) ist, mit einem Ausgangselement (50) mit linearer Verschiebung, die über eine Anschiebebewegung und eine Überschubbewegung verfügen.

9. Tool (1') zur Entnahme von Proben wie in vorherigen Punkten 5 bis 7 beschrieben, die ein Schutzgehäuse (6) enthält, und zwar mit einem Unterteil (60), an welchem der Führungskörper (1) fixiert ist. Der Stempel (2) ist am unteren Ende einer starren zylindrischen Führung (9) fixiert, mit Gleitjustierung im Inneren des Schutzgehäuses (6), sodass dieser anhand einer vertikalen Achse im Inneren bewegt werden kann, das Innere dieser Führung (9) mit einem Kanal (21) des Stempels (2) verbunden ist, welcher wiederum mit dem Flüssigkeitszuführkopf (7) verbunden ist, wobei Letztgenannter durch die externe Führung (9) am Schutzgehäuse (6) getragen wird.

10. Automatische Maschine (510) zur Entnahme von Proben, welche einen beweglichen Arm (511) enthält, möglicherweise multi-axial, mit einem Tool (1') zur Entnahme von Proben (1') wie beschrieben in Punkt 1 bis 9.

11. Eine automatische Zelle (500) zur Entnahme von Proben, die Folgendes enthält:
- Ablagetisch (550) zur Aufnahme von zellenartigen Einsätzen (530) die Pflanzen in Erdklumpen als Proben enthalten,
- eine automatische Maschine (510) ausgestattet mit einem beweglichen Arm (511), und,
- ein Tool (1') zur Entnahme von Probem wie beschrieben in Punkt 1 bis 9, getragen vom beweglichen Arm (511) der automatischen Maschine (510).

12. Die automatische Zelle (500), wie im vorherigen Punkt beschrieben, bei welcher der Ablagetisch (550) ein Transfersystem (560) für zellenartige Einsätze (530) enthält, geeignet für den Transfer von zellenartigen Einsätzen (530) zwischen dem Ablagetisch (550) und einer Vorrichtung zum Transport (520) der zellenartigen Einsätze und umgekehrt.

13. Die automatische Zelle (500), wie im vorherigen Punkt beschrieben, wobei der Ablagetisch (550) einen Stützfuß (552) enthält, auf welchem eine obere horizontale Abdeckung (551) angebracht wird, und zwar zum Aufnehmen der zellenartigen Einsätze (530) vom Transportsystem (520) und Vorrichtungen zur Positionierung und zum Halten von zellenartigen Einsätzen (530) auf der oberen Abdeckung (551).

14. Die automatische Zelle (500), wie im vorherigen Punkt beschrieben, wobei die obere Abdeckung (551) des Tisches durch Perforierungen (553), die wie ein Gitter angeordnet sind, identisch zu den Perforierungen des zellenartigen Einsatzes und dem besagten Tisch (550), unter der oberen Abdeckung (551) und in Ausrichtung mit den Perforierungen (553) der besagten oberen Abdeckung, mit starren, vertikalen Hubstangen (556), das dafür gedacht ist, durch eine Aufwärtsbewegung in die Löcher des oberen Abdeckung (551) und des zellenartigen Einsatzes eingeführt werden kann, um die Erdklumpen anzuheben und vom Rest der entsprecheden Zelle zu trennen.

15. Die automatische Zelle (500) wie in den vorherigen Punkten 13 oder 14 beschrieben, wobei die zwei diagonalen, gegenüberliegenden Hebearme (559) am Stützfuß (552) des Tisches fixiert sind, und der Rahmen (501) der Zelle, ausgestattet mit zwei vertikalen Führungsschienen (502), von denen jede ein Motorteil zum Betreiben des Hebefußes (503) enthält und die zusammen auf der Führungsschiene (502) gleiten, die beiden Hebearme (559) entsprechend unterstützt und gesichert durch die zwei Hebefüße (503), und zwar durch eine schwimmende Befestigung, die eine seitliche Gleitbewegung des Hebearms (559) zulässt, relativ zum Fuß, in dem sie befestigt ist.

16. Die automatische Zelle (500), wie in den vorherigen Punkten 13 bis 15 beschrieben, charakterisiert durch einen Bereich zum Abstellen von Probenahmekästen (506) und zum Sammeln von Proben. Dieser Abstellbereich ist ausgestattet mit einer Vorrichtung (508, 509) zum Positionieren und Halten eines Probenahmekastens (506).

17. Die automatische Zelle (500) wie im vorherigen Punkt beschrieben, wobei der Probenahmekasten (506) von einem Sockel (507) getragen wird, der zwischen einem Magazin und dem Abstell- und Probensammelbereich bewegt werden kann. Besagter Sockel (507) kann mit Hohlraumabdruck (507a) ausgestattet werden, um einen Probenahmekasten (506) aufzunehmen. Die untere Wand des Transportsockels (507) ist lichtdurchlässig, der Sockel enthält eine Hintergrundbeleuchtungsquelle zur Beleuchtung des Probenahmekastens (506) von unten und oberhalb des Abstell- und Probensammelbereiches, vertikal zum besagten Bereich, gibt es ein telezentrisches Bildverarbeitungssystem (570), durch welches die korrekte Befüllung der Behhälter oder Quellen im Probenahmekasten (506) mit Proben beobachtet werden kann.

18. Die automatische Zelle (500), wie in den vorherigen Punkten 11 bis 17 beschrieben, wobei die Halterung (580) zwei optische Systeme für den Ablagetisch trägt (550), und diese Halterung und Systeme horizontal von oben und aus einer Entfernung vom Tisch aus angezeigt werden können, und eines der optischen Systeme (587) aus einer ersten Kamera besteht und das andere optische System aus einer Stereokamera (582) und einer Laserstrahlenquelle (583).

19. Methode zur Entnahme von Proben mit Hilfe eines Tools (1') wie in Punkt 1 bis 9 beschrieben, wobei dies folgende Schritte enthält:
a) Bewegung des Tools (1') in Richtung einer vorher ausgewählten Pflanze oder alternativ Bewegung der Pflanze zum Tool (1'),
b) Befestigung der Öffnung (4) an eines der beiden Blätter der Pflanze,
c) Schneiden einer Probe durch Stanzen der Pflanze, indem man den Stempel (2) aus seiner Ausgangsposition in eine mittlere Position bringt,
d) den Stempel (2) des Tools (1') in dieser mittleren Position behalten, um so die Probe in der Durchgangsbohrung (30) der Matrize (3) zu behalten,
e) Entfernen des Toos (1') oder auch der Pflanze, während sichergestellt wird, dass der Stempel des Tools (1') in der mittleren Position bleibt,
f) Platzierung der Probe in einen geeigneten und dafür bestimmten Behälter.

20. Methode zur Analyse von Proben mit Hilfe eines Tools (1') wie in Punkt 1 bis 9 beschrieben, wobei dies folgende Schritte der Methode zur Entnahme von Proben enthält, wie im vorherigen Punkt beschrieben und ein weiterer Schritt zur Analyse der Proben, wobei die DNA analysiert wird.

## Claims

1. Tool (1') for sampling, preferably plant tissues, comprising:
- a guiding body (1) provided with a through bore (10),
- a part-holding punch (2) mounted with sliding adjustment in the through bore (10) of the guiding body, said punch comprising a bottom edge (20) of closed contour, forming a cutting edge,
- a part-holding die (3), secured to the guiding body (1), positioned under the latter and separated from said body by an introduction opening (4) for the plant to be cut, said die (3) being provided, in the axial alignment of the through bore (10) of the guiding body (1), with a through bore (30) into which the bottom end (20) of the punch (2) penetrates when cutting the sample to be taken, said introduction opening (4) is limited by a bottom face corresponding to the top face (32) of the die (3), by a top face corresponding to the bottom face (15) of the guiding body and by a rear vertical face (310) of a wall (31) linking the die (3) to the guiding body (1), said bore (30) being provided with a top edge of closed contour forming a cutting edge,
wherein
- a means for actuating the punch (2) between an initial position whereby it is retracted into the guiding body (1), a stable intermediate position of temporary stoppage, whereby the punch (2), by its bottom edge (20) is situated in the bore (30) of the die (3), and a final position whereby it passes right through the die (3) and whereby its bottom edge is outside the through bore (30) of the die (3),
and wherein the contour of each rear part of the cross sections of the bottom part of the punch (2) and of the bore (30) of the die (3) is tangential to a vertical geometrical plane containing the rear face (310) of the opening (4).

2. Tool (1') for sampling according to the preceding claim, wherein the trajectory of the punch (2) is tangential to the rear vertical face (310) of the opening (4) and that the through bore (30) of the die (3) is tangential to a geometrical plane containing said rear face (310) in order to produce, in the plant from which the sample is to be taken, a cut with open contour.

3. Tool (1') for sampling according to the preceding claim, wherein the cross section of the bottom part of the punch (2) and the cross section of the bore (30) of the die (3) each have a front part and a rear part, the front part being wider than the rear part.

4. Tool (1') for sampling according any one of the preceding claims, wherein means for ejecting a gaseous fluid or a liquid fluid or a mixture of the two at the bottom end of the punch (2) .

5. Tool (1') for sampling according to the preceding claim, wherein the ejection means comprise a gaseous or liquid fluid feed head (7), an internal channel (21) for dispensing a gaseous and/or liquid fluid, formed in the punch (2), interconnected with the feed head (7) and at least one nozzle (21a) formed in the bottom part of the punch (2) and emerging in the bottom face thereof, said nozzle (21a) being interconnected with the internal channel (21) of the punch (2).

6. Tool (1') for sampling according to the preceding claim, wherein the internal channel (21) receives a cannula (8) for dispensing gaseous and/or liquid fluid, interconnected on the one hand with the feed head (7) and on the other hand with the or each nozzle (21a).

7. Tool (1') for sampling according to the preceding claim, wherein the diameter of the cannula (8) is smaller than the diameter of the channel (21) in order to form, between said cannula (8) and said channel (21), a pathway for the gaseous and/or liquid fluid, this pathway being interconnected on the one hand with the feed head (7) and on the other hand with the or each nozzle (21a) of the punch (2).

8. Tool (1') for sampling according any one of the preceding claims, wherein the actuation means is a motor means (5) having an output element (50) with linear displacement, on which an effort and a displacement movement are available.

9. Tool (1') for sampling as claimed in any one of claims 5 to 7, wherein it has a protective casing (6) provided with a bottom base (60) to which the guiding body (1) is fixed, that the punch (2) is fixed to the bottom end of a rigid cylindrical duct (9) engaged with sliding adjustment in the internal volume of the protective casing (6) so as to be guided therein by sliding along a vertical axis, that the internal volume of this duct (9) is interconnected with the channel (21) that the punch (2) includes and is interconnected with the fluid feed head (7), the latter being borne, externally to the protective casing (6), by the duct (9).

10. Automatic machine (510) for taking samples, wherein it comprises a manipulating arm (511), possibly multi-axial, bearing tool (1') for sampling (1') as claimed in one of claims 1 to 9.

11. An automated cell (500) for taking samples, wherein it comprises:
- a support table (550) for receiving cellular trays (530) bearing plants in clods of earth to be sampled,
- an automatic machine (510) provided with a manipulating arm (511), and,
- a tool (1') for sampling as claimed in one of claims 1 to 9 borne by the manipulating arm (511) of the automatic machine (510).

12. The automated cell (500) according to the preceding claim, wherein the support table (550) comprises a transfer system (560) for cellular trays (530), suitable for ensuring the transfer of the cellular trays (530) between the support table (550) and a means for transporting (520) the cellular trays, and vice versa.

13. The automated cell (500) according to the preceding claim, wherein the support table (550) comprises a stand (552) on which is installed a top horizontal deck (551) provided to receive each cellular tray (530) from the transport means (520), and means for positioning and holding a cellular tray (530) on the top deck (551).

14. The automated cell (500) according to the preceding claim, wherein the top deck (551) of the table comprises through perforations (553) organized according to a grid identical to that according to which the through perforations of the cellular tray are organized and that said table (550), under the top deck (551) and in the alignment of the through perforations (553) of said top deck, comprises lifting vertical rigid rods (556) provided to be engaged, by upward movement, into the through piercings of the top deck (551) and of the cellular tray to lift the clods of earth and separate them from the corresponding cell.

15. The automated cell (500) according any one of claims 13 or 14 , wherein two diagonally opposite lifting arms (559) are fixed to the stand (552) of the table, and that the frame (501) of the cell is provided with two vertical guiding rails (502) each incorporating a motor member for actuating a lifting foot (503) cooperating slidingly with the guiding rail (502), the two lifting arms (559) being respectively borne by the two lifting feet and being secured respectively to these two lifting feet (503) via a floating mount allowing a sliding vertical movement of the lifting arm (559) relative to the foot which bears it.

16. The automated cell (500) according any one of claims 13 to 15, **characterized by** an area for parking sampling boxes (506) and for collecting samples, this parking area being equipped with means (508, 509) for positioning and holding a sampling box (506).

17. The automated cell (500) according to the preceding claim, wherein the sampling box (506) is born by a pod (507) that can move between a magazine and the parking and sample collecting area, said pod (507) being provided with a hollow imprint (507a) provided to receive a box (506), the bottom wall of the transport pod (507) is transparent to light, that the pod incorporates a backlighting source suitable for lighting the sampling box (506) from below and that, above the parking and sample collecting area, vertical to said area, there is a telecentric vision system (570), by which the correct filling of the containers or wells borne by the sampling box (506) with samples can be observed.

18. The automated cell (500) according any one of claims 11 to 17, wherein a mount (580) bearing two optical systems oriented toward the support table (550), that this mount and the systems that it bears can be displaced horizontally above and at a distance from the table, that one of the optical systems (587) consists of a first camera and that the other optical system consists of a stereoscopic camera (582) and of a laser ray source (583).

19. A method for taking a sample implementing a tool (1') as claimed in any one of claims 1 to 9, wherein it comprises the following steps:
a) moving the tool (1') toward a previously selected plant or alternatively moving the plant toward the tool (1'),
b) engaging the opening (4) on either side of one of the leaves of this plant,
c) cutting a sample by punching the leaf and doing so by moving the punch (2) from its initial position to its intermediate position,
d) keeping the punch (2) of the tool (1') in the intermediate position, in order to keep the sample in the through bore (30) of the die (3),
e) removing the tool (1') or alternatively the plant, while ensuring that the punch of the tool (1') is kept in the intermediate position,
f) depositing the sample in an appropriate and dedicated container.

20. A method for analyzing samples implementing a tool (1') according to any one of claims 1 to 9, wherein it comprises the following steps of the method for taking a sample as the preceding claim, and a step of analyzing the samples, notably analyzing their DNA.
